# EUROPÄISCHE PATENTSCHRIFT

(11) **EP 3 500 370 B1**
(45) Veröffentlichungstag und Bekanntmachung des Hinweises auf die Patenterteilung: **24.06.2020**
(21) Anmeldenummer: 17761202.5
(22) Anmeldetag: 21.08.2017
(51) Int. Cl.: B02C 25/00, B02C 4/38, B02C 4/06, B02C 4/32, B02C 4/30

(54) **ÜBERWACHUNGS- UND STEUERUNGSVORRICHTUNG ZUR AUTOMATISIERTEN OPTIMIERUNG DER VERMAHLUNGSLINIE EINES WALZENSYSTEMS UND ENTSPRECHENDES VERFAHREN**
MONITORING AND CONTROLLING DEVICE FOR AUTOMATED OPTIMISATION OF A MILLING LINE OF A ROLLER SYSTEM AND CORRESPONDING METHOD
DISPOSITIF DE SUPERVISION ET DE COMMANDE POUR UNE OPTIMISATION AUTOMATISÉE D'UNE LIGNE DE BROYAGE D'UN SYSTÈME DE ROULEAUX ET UN PROCÉDÉ CORRESPONDANT

(30) Priorität: 22.08.2016 CH 10752016
(43) Veröffentlichungstag der Anmeldung: 26.06.2019
(73) Patentinhaber: Bühler AG, 9240 Uzwil (CH)
(72) Erfinder: REITER, Emanuel, 9240 Uzwil (CH)
(74) Vertreter: Leimgruber, Fabian Alfred Rupert
(86) Internationale Anmeldenummer: PCT/EP2017/071060
(87) Internationale Veröffentlichungsnummer: WO 2018/036978

(56) Entgegenhaltungen:
- WO-A1-2010/000816
- WO-A1-2014/195309
- DE-A1- 4 243 262
- DE-A1- 19 819 614

## Beschreibung

### Gebiet der Erfindung

Die vorliegende Erfindung betrifft Überwachungs- und Steuerungssysteme zur automatisierten Optimierung von Mahl- und Walzsystemen, insbesondere Mahl- und Walzsysteme zum Vermahlen und/oder Schroten von Körnerfrüchten oder zum Bearbeiten durch Zerkleinerung und Homogenisierung von zähflüssigem Gut, insbesondere von Schokoladenmassen, Druckfarben und ähnlichem. Insbesondere betrifft die vorliegende Erfindung Walzsysteme mit Mahlwalzenpaarungen, Messeinrichtungen zum lösbaren Einsetzen in eine Aufnahmeöffnung eines Walzenkörpers einer Walze einer Walzenpaarung, insbesondere einer Mahlwalze einer Mahlwalzenpaarung, Produktverarbeitungsanlagen, enthaltend mindestens eine Walzenpaarung, insbesondere Mahlanlagen enthaltend mindestens eine Mahlwalzenpaarung, sowie entsprechende Verfahren zum optimierten Betreiben derartiger Mahl- und Walzsystemen bzw. Produktverarbeitungsanlagen.

### Hintergrund der Erfindung

Seit Einführung der paarweise nebeneinanderlaufenden Walzen hat die Bezeichnung Hochmüllerei die Berechtigung mehr oder weniger verloren. Sie wurde jedoch beibehalten, weil man bei der Benutzung von Walzen die Mahlung, entsprechend der ehemaligen Stellung der Mühlsteine, auf weit voneinander gestellten Walzen beginnt und die folgenden Schrotungen stufenweise auf enger gestellten vornimmt, um die entsprechenden Mengen Gries oder Mahlgut zu gewinnen. Mahlwalzen, so wie sie beispielsweise in der Getreidemüllerei verwendet werden, bedürfen einer ständigen Überwachung. So kann es beispielsweise passieren, dass gelegentlich ein sogenannter Trockenlauf auftritt, bei dem benachbarte Mahlwalzen einander z.B. berühren und die Antriebsleistung des Motors unkontrolliert in Wärme umgewandelt wird. Dauert der vorgenannte Zustand zu lange an, so kann die Temperatur der Mahlwalze in einen kritischen Bereich steigen und möglicherweise einen Brand oder Schäden an den Walzen verursachen. Um dies zu verhindern, ist es bereits bekannt (siehe z.B. WO 2014/195309 A1), die Temperatur einer Mahlwalze mit Hilfe eines oder mehrerer Sensoren zu überwachen und beim Erreichen einer kritischen Temperatur eine Warnmeldung auszugeben. Häufig werden hierfür optische Systeme zur Detektion der Umfangsfläche der Mahlwalze herangezogen. Problematisch hierbei ist jedoch, dass diese optischen bzw. berührungslose Systeme sich im Produktraum befinden, durch den auch das Mahlgut strömt. Aus diesem Grunde sind derartige optische Systeme äusserst anfällig gegenüber Verschmutzungen.

In Mahlanlagen wird zudem angestrebt, die Überwachung und Optimierung der Mühle immer mehr zu automatisieren, zum einen, um Kosten zu senken und zum anderen, weil immer mehr ungeschultes Personal die Aufsicht über den Vermahlungsprozess übernimmt oder übernehmen muss. Typischerweise wird beim Vermahlen von Körnerfrüchten vom Müller die Granulation des Mahlguts oder die Temperatur/Temperaturverteilung der Walzen manuell kontrolliert. Das heisst, dass der Müller während des Mahlvorganges in zeitlichen Abständen prüft, ob die Walzen eine gleichmäßige Temperaturverteilung besitzen. Bei manueller Kontrolle fährt der Müller mit der Hand über die Länge der Walzen und prüft hierbei, ob die Walzen in den Seitenbereichen und in der Mitte ungefähr die gleiche Temperatur aufweisen. Dabei ist gemäss dem Stand der Technik (DE-OS 27 30 166) ebenfalls bekannt, dass es immer wieder Störeinflüsse gibt und geben kann, welche idealisierte Vermahlungsbedingungen nicht zulassen oder stark von diesen abweichen. Zu diesen Störeinflüssen zählen unter anderem ungleichmäßige Walzentemperaturen. Gemäss der obgenannten Druckschrift wird vorgeschlagen, an mindestens einer Walze ein- oder beidseitig einen Temperaturfühler anzuordnen. Der Temperaturfühler ist gemäss dieser Druckschrift im Bereich der Lager im Lagergehäuse angeordnet. Diese zum Stand der Technik gehörende Anordnung hat den Nachteil, dass die Temperatur der Walze mit zeitlicher und räumlicher Verzögerung bestimmt wird, nämlich dann, wenn die Oberflächentemperatur der Walze sich bis in die Lager ausgedehnt hat. Aus der DE 102 26 411 A1 ist zudem bekannt, die Temperatur der Umfangsfläche einer Mahlwalze mit Hilfe von Temperatursensoren berührungslos zu messen. Auf Grund des Abstandes zwischen Sensor und Umfangsfläche der Mahlwalze kann die tatsächliche Temperatur der Umfangsfläche zum Teil erheblich von der gemessenen Temperatur abweichen. Diese Abweichungen müssen dann basierend auf reinen Erfahrungswerten, d.h. empirisch, bei der Auswertung berücksichtigt werden, was umständlich und auch fehleranfällig ist. Die damit verbundene Kalibrierung ist somit personen-abhängig. Weiter offenbart auch die DE 198 19 614 A1 Temperaturfühler, die in einem Abstand zu den Mahlwalzen angeordnet sind. Von Bedeutung ist weiter die Überwachung des Walzenverschleisses. Hierzu offenbart die DE 42 22 085 A1 Vorrichtungen zur Messung der Oberflächenbeschaffenheit einer Mahlwalze. Auch diese Vorrichtungen sind jedoch ausserhalb der Umfangsfläche der Mahlwalze angeordnet und weisen daher die bereits oben beschriebenen Nachteile auf. Weiter bekannt sind Vorrichtungen und Verfahren, mit denen bei Riffelwalzen der Verschleiss gemessen werden kann. Diese Messungen sind jedoch nur beim Stillstand der Mahlwalzen möglich. Auch wenn diese Messung präzise ist, so muss die Mahlanlage dafür stets angehalten werden.

Weiter sind Drucksensoren bekannt, mit deren Hilfe des Anpressdrucks zwischen zwei benachbarten Mahlwalzen gemessen werden kann. Schliesslich sind auch Vibrationssensoren für Mahlwalzen bekannt, z.B. aus dem Dokument WO 2007/025395 A1. All diese Sensoren sind typischerweise ausserhalb der Mahlwalzen angeordnet. Aus WO 2014/195309 A1 sind schliesslich für die Verarbeitung eines Produktes auch Walzenpaarungen bekannt, welche zwei Walzen enthalten, wobei eine oder beide Walzen mindestens einen Sensor enthält bzw. enthalten. Dabei wird Sensorik innerhalb der Umfangsfläche der Walze erreicht. Allerdings beschränkt sich die in die Walze integrierte Funktionalität auf die Sensorik. Der Fachmann würde alle möglichen Versuche mit einer Walze einer Walzenpaarung, die Schüttgut, Mahlgut oder Massen verarbeitenden, ausser Betracht lassen, die ausser einem Sensor eine darüberhinausgehende Steuerung enthalten - unter anderem z.B. wegen den extremen Kraft-, Druck-, Temperatur- und Staubverhältnisse in der Umgebung der Walze oder Walzenpaarung und wegen der entsprechenden konventionellen, überwiegend manuellen Verfahrensmethodik bei der Schüttgutverarbeitung.

### Detaillierte Beschreibung der Erfindung

Es ist eine Aufgabe der vorliegenden Erfindung, die aus dem Stand der Technik bekannten Nachteile und technischen Probleme zu lösen. Insbesondere soll ein selbst-optimierendes Steuerungssystem und Verfahren zum Vermahlen und/oder Schroten von Körnerfrüchten angegeben werden, mit dem die Vermahlung und/oder Schrotung optimiert und automatisiert durchgeführt werden kann, und welches die Betriebssicherheit einer Mühle erhöht. Das System soll eine entsprechende Walzenpaarung, insbesondere eine Mahlwalzenpaarung, und eine Produktverarbeitungsanlage, insbesondere eine Mahlanlage für das Vermahlen von Mahlgut, bereitstellen, mit denen ein Zustand mindestens einer Walze oder beider Walzen einer Walzenpaarung, insbesondere mindestens einer oder beider Mahlwalzen einer Mahlwalzenpaarung, mit grösserer Genauigkeit bestimmt werden kann und die zudem weniger anfällig gegenüber Verschmutzungen sind. Hierdurch sollen zumindest in einigen Ausführungsformen die Betriebssicherheit erhöht werden, und es sollen Rückschlüsse auf die Leistung eines Verarbeitungsprozesses, insbesondere eines Mahlprozesses, geliefert werden können. Insbesondere soll das System eine automatisierte Überwachung und Kontrolle bereitstellen, ob die Walzen zueinander parallel stehen und damit die optimale Vermahlungslinie haben, da insbesondere ein mehrfaches Einsetzen eines solchen Systems z.B. in allen Vermahlungsmaschinen zur deutlichen Steigerung der Vermahlungseffizienz führen kann. Schliesslich ist es eine Aufgabe der Erfindung eine Vorrichtung für maschinelles Lernen bereitzustellen, die Walzenpaarungen optimal und dynamisch überwachen und anpassen kann, ohne detaillierte Betriebsbedingungen manuell zu prüfen oder einzustellen.

Diese technischen Probleme werden durch die Merkmale der unabhängigen Ansprüche sowie durch die Merkmale der abhängigen Ansprüche gelöst.

Im Folgenden wird die Erfindung an Hand von Ausführungsbeispielen und Zeichnungen näher erläutert:

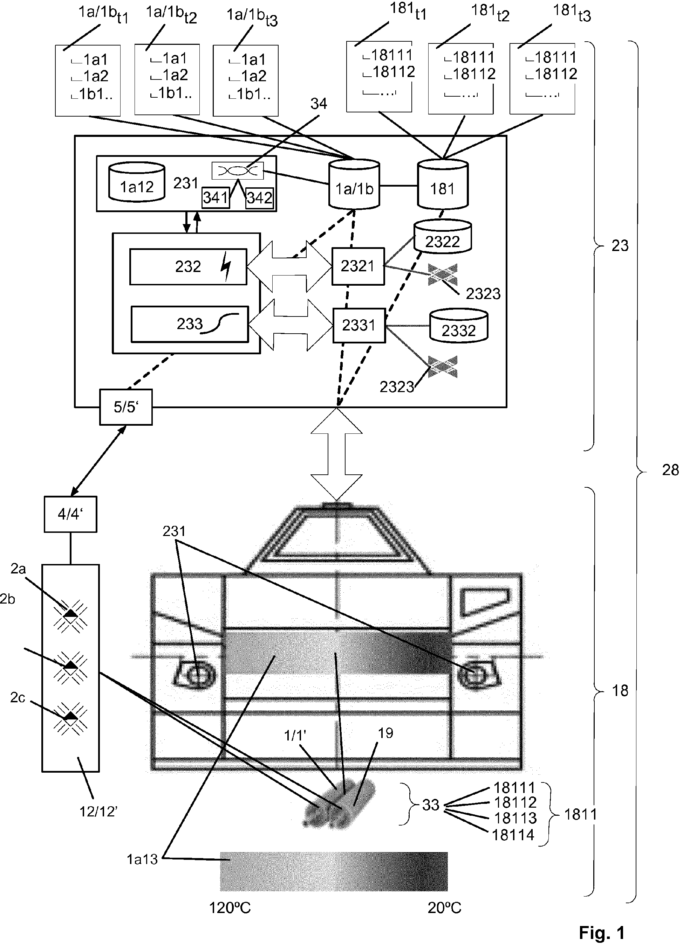

Figur 1 illustriert schematisch eine selbst-optimierende, adaptive Produktverarbeitungsanlage 28 mit einer Mahlanlage 18 enthaltend mindestens eine Walzenpaarung 33. Die Walzenpaarung 33 umfasst für die Verarbeitung eines Produktes zwei Walzen 1/1',19. Mindestens eine der Walzen 1/1' umfasst einen oder mehrere Sensoren 2/2' zur Erfassung von Messwerten, welche einen Zustand der entsprechenden Walze 1/1' messbar charakterisieren. Eine Messeinrichtung 12/12' ist in eine Aufnahmeöffnung 11/11' des Walzenkörpers 10/10' der mindestens eine Walze 1/1' für die Verarbeitung des Produktes einsetzt. Die Messeinrichtung 12/12' umfasst mindestens einen der Sensoren 2/2' zum Erfassen der Messwerte, die einen Zustand der Walze 1/1' charakterisieren. Mit einem Datenempfänger 5/5' einer Steuereinheit 23 der Produktverarbeitungsanlage 28 werden von einem Datensender 4/4' der Messeinrichtung 12/12' von mindestens einer Walze 1/1' der Walzenpaarung 33 Messwerte empfangen bzw. mit dem Datensender 4/4' auf den Datenempfänger 5/5' übertragen.

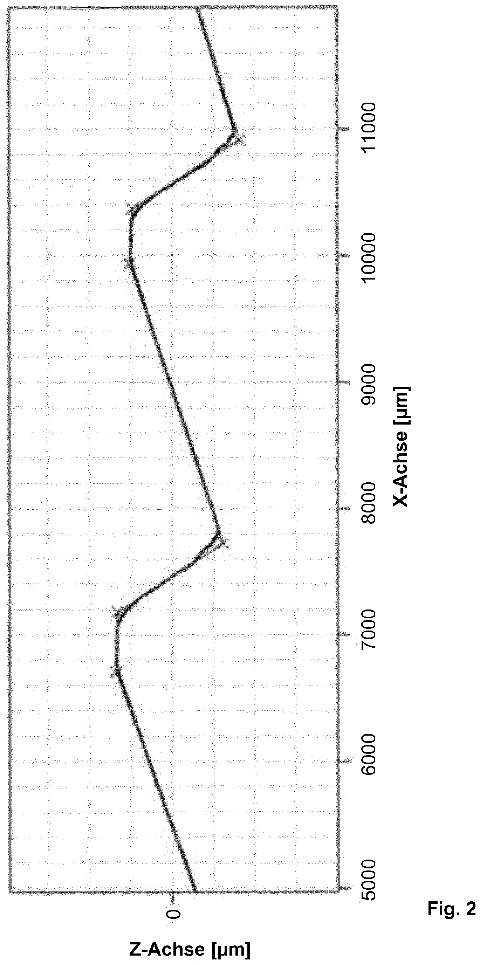

Figur 2 illustriert schematisch die Erkennung eines Riffeltyps 1b2 einer Walze 1/1' mittels Messwerte 1a/1b der Walze 1 /1'. Dabei wird die Oberflächenstruktur der Walze 1/1' sowohl in der x-Achse, wie in der y-Achse in µm angegeben.

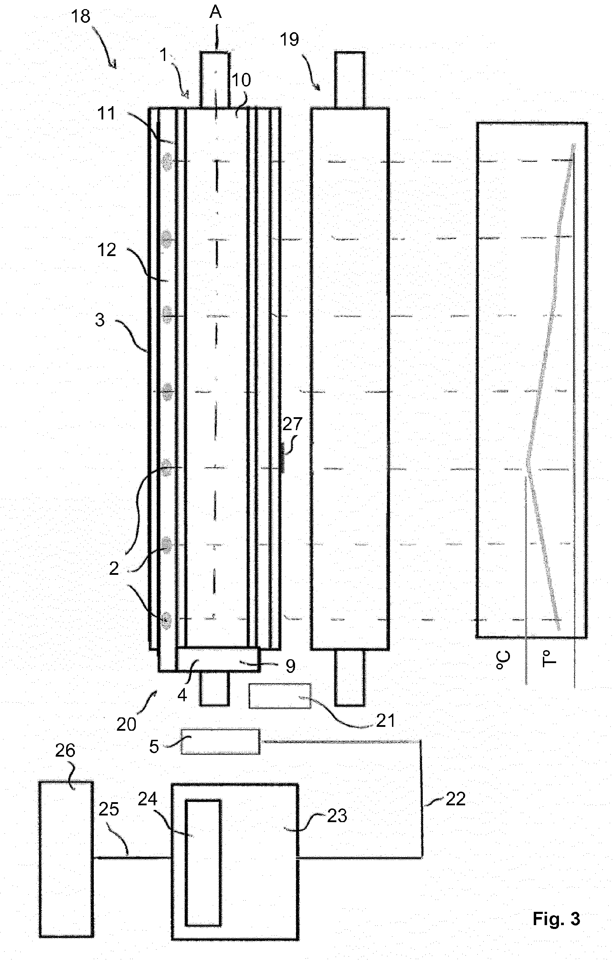

Figur 3 illustriert schematisch eine Darstellung einer ersten Mahlanlage 18 mit einer Mahlwalze 1 und mehreren Temperatursensoren 2. Die Produktverarbeitungsanlage in Figur 1 ist als Mahlanlage 18 für das Vermahlen von Mahlgut ausgebildet, insbesondere für das Vermahlen von Getreide. Die Mahlanlage 18 enthält eine Mahlwalzenpaarung aus einer ersten Mahlwalze 1 mit sieben Temperatursensoren 2 und einem Datensender 4 sowie einer zweiten Mahlwalze 19, die jedoch nicht zwingend einen Sensor oder einen Datensender enthalten muss. Die erste Mahlwalze 1 enthält einen Walzenkörper 10 mit einer Aufnahmeöffnung 11 in Form einer zylindrischen Bohrung, welche sich parallel zu einer Rotationsachse A des Walzenkörpers 10 und entlang dessen gesamter Länge erstreckt. In die Aufnahmeöffnung 11 ist eine stabförmige Messeinrichtung 12 eingesetzt, die die sieben Temperatursensoren 2 enthält. Die Messeinrichtung 12 ist in der Aufnahmeöffnung 11 vergossen und hierdurch unlösbar in der Aufnahmeöffnung 11 eingesetzt. Mit Hilfe der Temperatursensoren 2 können Messwerte erfasst werden, die die Temperatur an verschiedenen Stellen einer Umfangsfläche 3 der Mahlwalze 1 charakterisieren. Der Aufbau der Messeinrichtung 12 wird weiter unten mit den Figuren 2 und 3a bis 3d noch detaillierter beschrieben.
   Die in der Mahlwalze 1 gemäss Figur 3 enthaltenen Messeinrichtung 12 kann z.B. in die Aufnahmeöffnung 11 als eine stabförmige Messeinrichtung 12 eingesetzt sein, die die Temperatursensoren 2 enthält. Die Leiterplatte 9 kann den Multiplexer 6 enthalten. Bei der Messeinrichtung 12 kann an einem Ende das Kabel 29 austretten. Am Ende dieses Kabels 29 kann sich ein Stecker 30 befinden, mit dem die Messeinrichtung 12 mit dem Datensender 4 verbunden werden kann. Die Temperatursensoren 2 können beispielsweise vom dem bekannten Typ PT 1000 oder ähnlichem sein.

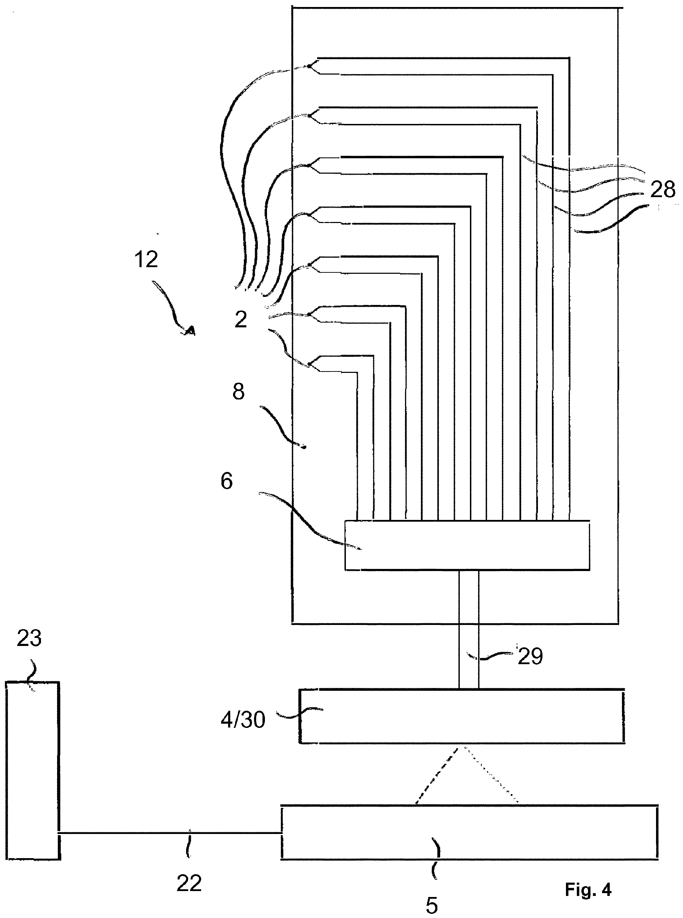

Figur 4 zeigt schematisch eine weitere Darstellung der Mahlanlage 18 nach Figur 3.

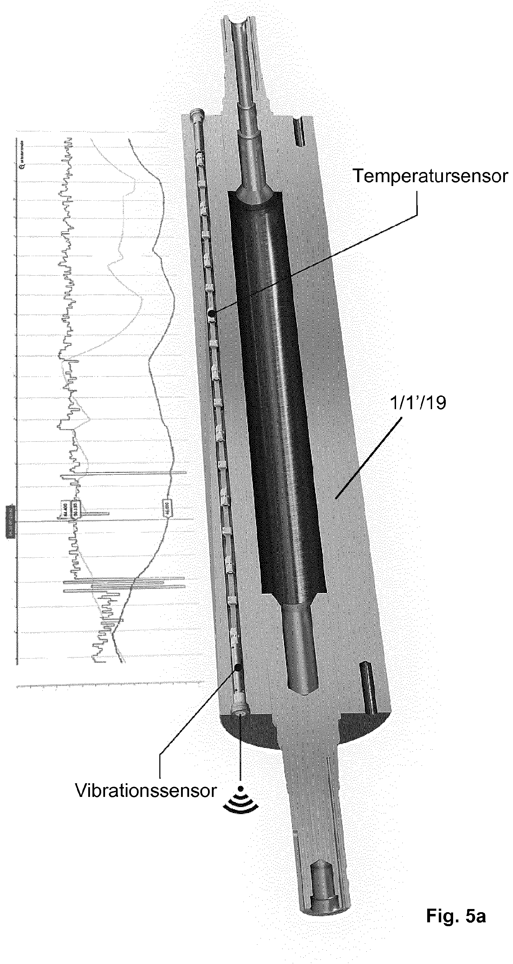

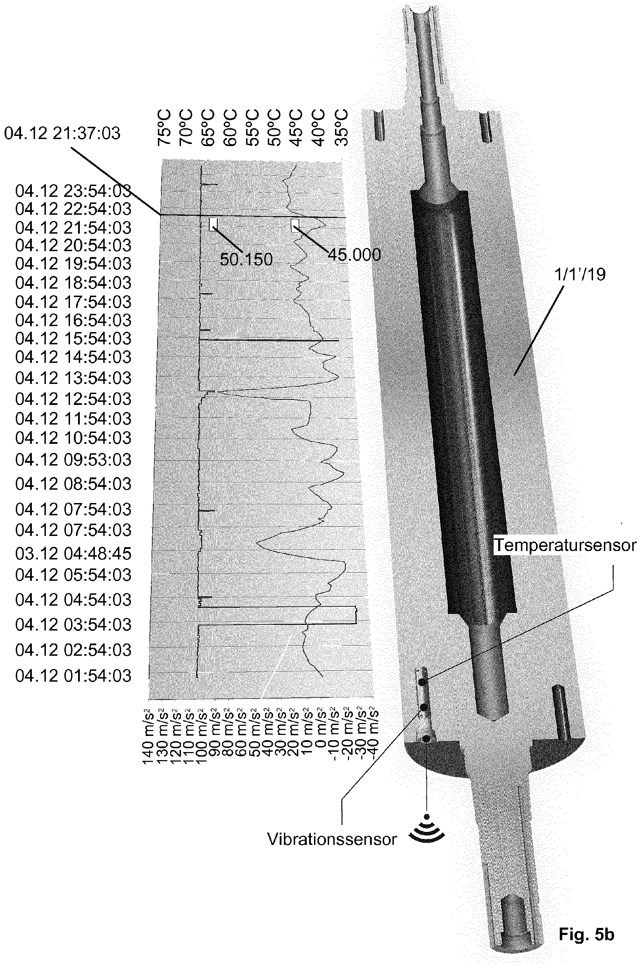

Die Figuren 5a und 5b zeigen zwei mögliche Ausführungsvarianten des Integrierens der Sensoren 2/2' in eine oder beide Walzen 1/1'/19 der Walzenpaarung 33. Bei Figur 5a sind die Sensoren 2/2'in eine durchgehende Aufnahmeöffnung der Walzen 1/1'/19 integriert (iRoll-Verfahren), während sie in Figur 5b als Plugs an den distalen Enden der Walzen 1/1'/19 integriert sind (iPlug-Verfahren). Bei Figur 5a (iRoll) kann die Temperaturmessung z.B. alle 121mm mittels den Sensoren 2a über die gesamte Länge der Walze 1/1'/19 erfolgen. Bei dem iPlug-Verfahren gemäss Fig. 5b findet die Temperaturmessung entweder an einer oder beiden Seiten der 1/1'/19 z.B. einmalig mittels eines Sensors 2a statt. Bei Figur 5a wie 5b kann die Beschleunigungsmessung mittels eines Accelerometers 2c (z.B. 3-Achsen Beschleunigungsmessung). Die Datenübertragung bzw. die entsprechende Datenverbindung kann z.B. via integrierter Bluetooth Low Energy zu 1xB-Cube pro Mahlanlage 18/18'. Bei Figur 5a zeigt der gelbe/violette Verlauf den Temperaturverlauf in °C (x-Achse, vertikal, am Beispiel zweier Temperatursensoren gelb/violett) der Walzen in Abhängigkeit der Messzeitpunkte (y-Achse horizontal) an, während der grüne Verlauf die gemessene Beschleunigung/Vibration in m/s² (x-Achse, vertikal, in diesem Beispiel ist die 3-Achsen Beschleunigungsmessung zu einem Vibrationswert zusammengefasst) der Walzen in Abhängigkeit der Messzeitpunkte (y-Achse horizontal) anzeigt. Bei Figur 5b zeigt der violette Verlauf den Temperaturverlauf in °C (x-Achse, vertikal) der Walzen in Abhängigkeit der Messzeitpunkte (y-Achse horizontal) an, während der grüne Verlauf die gemessene Beschleunigung in m/s² (x-Achse, vertikal, in diesem Beispiel ist die 3-Achsen Beschleunigungsmessung zu einem Vibrationswert zusammengefasst) der Walzen in Abhängigkeit der Messzeitpunkte (y-Achse horizontal) anzeigt.

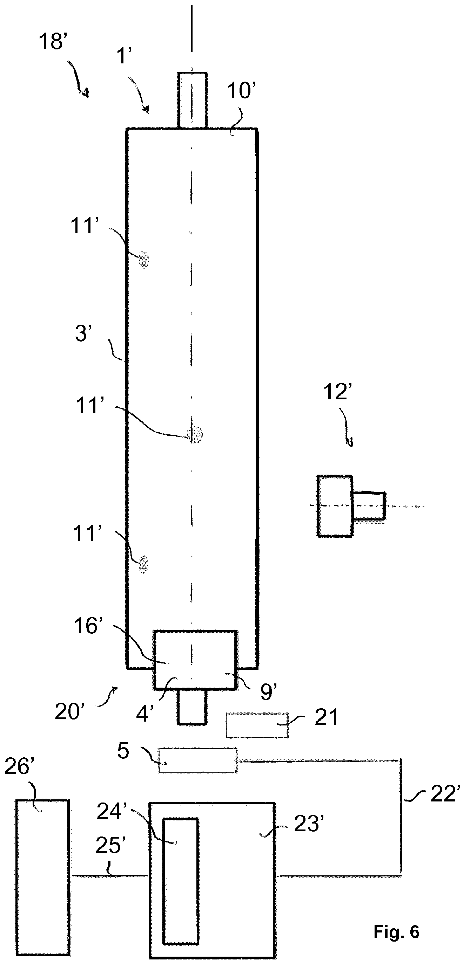

Figur 6 zeigt ein zweites erfindungsgemässes Ausführungsbeispiel der Produktionsanlage mit einer Mahlanlage 18' und einer Mahlwalze 1 mit mehreren Drucksensoren. Die Anlage ist als Mahlanlage 18' zum Vermahlen von Mahlgut, insbesondere Getreide, ausgebildet. Zur Vereinfachung der Darstellung ist hier nur eine Mahlwalze 1' einer Walzenpaarung wiedergegeben und nicht auch eine weitere Mahlwalze 19 wie in Figur 3. In einer Umfangsfläche 3' eines Walzenkörpers 10' der Mahlwalze 1' sind mehrere Aufnahmeöffnungen 11' vorhanden, von denen hier nur 3 dargestellt sind. Diese Aufnahmeöffnungen 11' erstrecken sich in radialer Richtung des Walzenkörpers 10', das heisst senkrecht zu einer Rotationsachse A' des Walzenkörpers 10'. In Figur 6 ist weiterhin (nicht massstabsgerecht) ein Bolzen 12' gezeigt, der eine Messeinrichtung darstellt. Dieser Bolzen 12' enthält ein in der Figur nicht gezeigtes Gewinde. Jede der Aufnahmeöffnungen 11' weist ein ebenfalls nicht dargestelltes Gegengewinde auf, in welches der Bolzen 12' einschraubbar ist. Der Bolzen 12' weist ferner einen Sensor 2/2' sowie einen Datensender 4/4' auf, welche in Figur 6 beide nicht dargestellt sind. Der Sensor 2/2' kann beispielsweise ein Verschleisssensor 2f, ein Drucksensor 2d, ein Temperatursensor 2a, ein Vibrationssensor 2b, ein Beschleunigungssensor/Accelermometer 2c, ein Kraftsensor 2e oder ein Deformationssensor 2g etc. sein. An einer Stirnseite 20' der Mahlwalze 1' sind ein Datensender 4', ein Energieempfänger 9' und ein Datenempfänger 16' angeordnet. Die vom Sensor 2' erfassten Messdaten können auf diese Weise vom Datensender des Bolzens 12' zum Datenempfänger 16' des Walzenkörpers 1' berührungslos übertragen werden, beispielsweise durch Infrarotstrahlung, durch Lichtpulse, durch Radiofrequenzsignale, durch induktive Kopplung oder durch eine beliebige Kombination davon. Dies geschieht bevorzugt durch einen Innenraum, insbesondere einen Hohlraum des Walzenkörpers 10'. Der Bolzen 12' kann induktiv und/oder über Licht mit Energie versorgt werden. Alternativ oder zusätzlich kann er mindestens ein Piezoelement enthalten, mittels dessen aus den bei Rotation der Mahlwalze 1' entstehenden Kräften elektrische Energie erzeugt werden kann. Ebenfalls alternativ oder zusätzlich kann der Bolzen 12' mindestens eine insbesondere wiederaufladbare Batterie aufweisen.

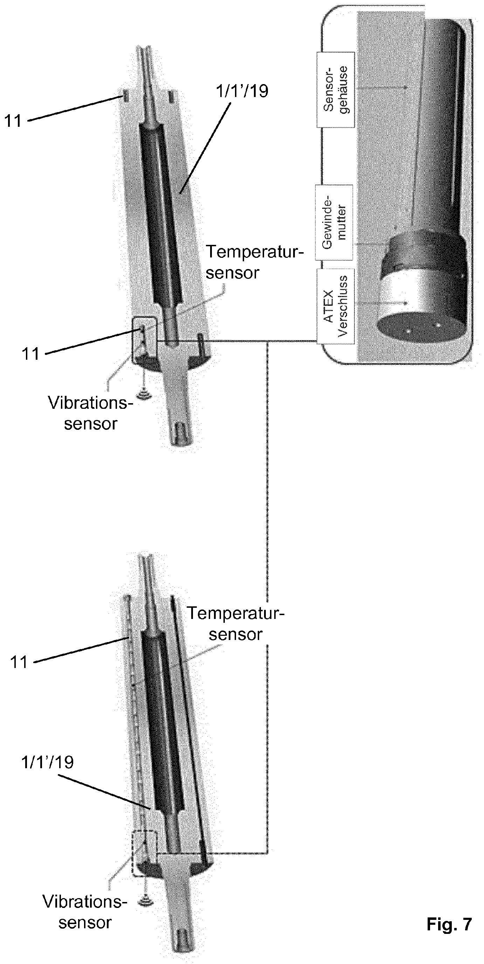

Figur 7 zeigt schematisch, dass die Messeinrichtung z.B. lösbar oder unlösbar in der Aufnahmeöffnung eingesetzt sein kann. Ist die Messeinrichtung lösbar in der Aufnahmeöffnung eingesetzt, kann sie leicht ausgetauscht werden, falls sie beispielsweise gereinigt oder gewartet werden muss oder defekt ist. Ist die Messeinrichtung unlösbar in der Aufnahmeöffnung eingesetzt, kann auf diese Weise die Messeinrichtung sicherer mit dem Walzenkörper verbunden werden. Zudem kann ein unbefugtes Entfernen der Messeinrichtung verhindert werden, was die Sicherheit beeinträchtigen könnte. Die Messeinrichtung kann beispielsweise in der Aufnahmeöffnung vergossen sein (z.B. mit Hilfe eines Harzes) oder eingeschweisst sein. Hierdurch kann auch das Risiko von Explosionen vermieden werden, so dass insbesondere die ATEX-Leitlinien der Europäischen Union erfüllt werden können.

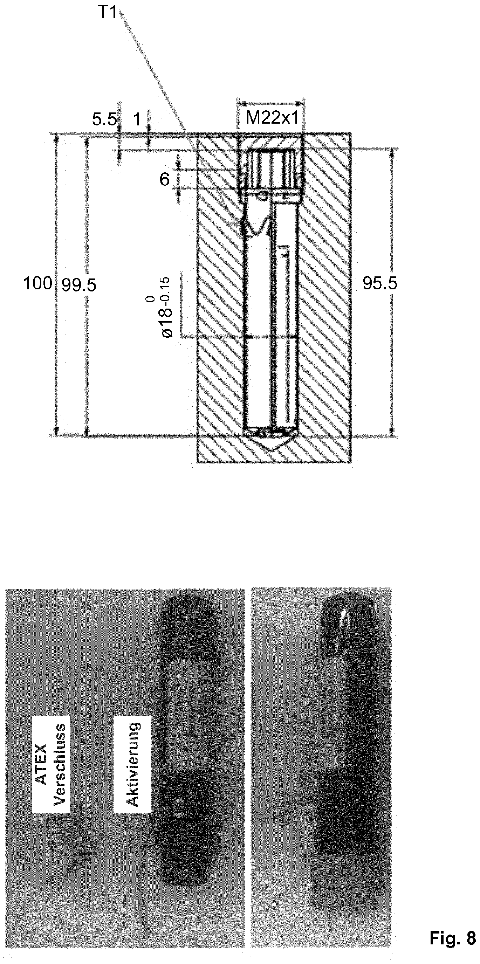

Figur 8 zeigt detaillierter schematisch die Integration der Sensoren 2/2'beim iPlug-Verfahren gemäss Fig. 5b. Die Temperaturmessung findet dabei entweder an einer oder beiden distalen Seiten der 1/1'/19 z.B. einmalig mittels eines Sensors 2a statt. Die Messeinrichtung 12/12' wird im Plug-Verfahren in die entsprechende Öffnung 11/11'eingesetzt. Das gezeigte ATEX cap dient zum Verschliessen der Messeinrichtung 12/12' mit den Sensoren 2/2'.

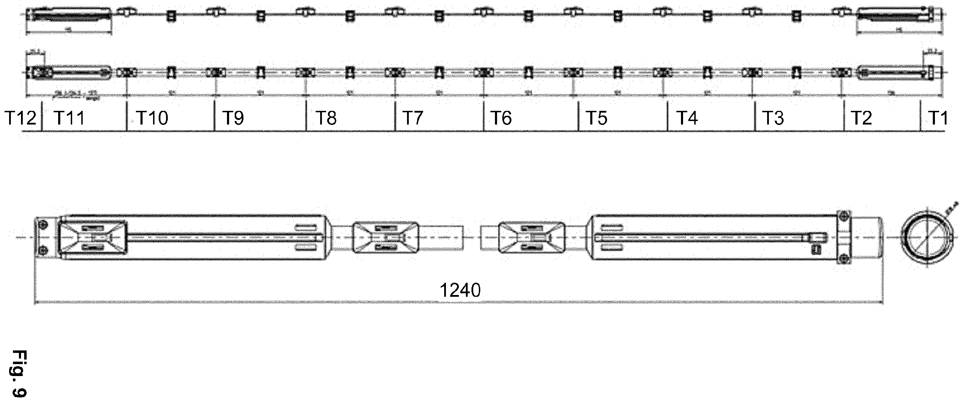

Figur 9 zeigt detaillierter schematisch die Integration der Sensoren 2/2'beim iRoll-Verfahren gemäss Fig. 5a, wobei die Sensoren 2/2'in eine durchgehende Aufnahmeöffnung der Walzen 1/1'/19 integriert sind. Die Temperaturmessungen T1 bis T12 kann dabei z.B. alle 121mm mittels den Sensoren 2a über die gesamte Länge der Walze 1/1'/19 erfolgen.

Figur 1 zeigt die gesamte selbst-optimierende, adaptive Produktverarbeitungsanlage 28 mit der Mahlanlage 18. Die Mahlanlage 18 enthält mindestens eine Walzenpaarung 33, wobei die Walzenpaarung 33 für die Verarbeitung eines Produktes oder Mahlgutes, wie z.B. Weizen oder Kakaobohnen, zwei Walzen 1/1',19 umfasst. Mindestens eine der Walzen 1/1' umfasst mindestens einen Sensor 2/2' zur Erfassung von Messwerten 1a/1b/181, die einen Zustand von mindestens einer Walze 1/1' charakterisieren bzw. messbar definieren. Eine Messeinrichtung 12/12' ist in eine Aufnahmeöffnung 11/11' eines Walzenkörpers 10/10' die mindestens eine Walze 1/1' der Walzenpaarung 33 für die Verarbeitung eines Produktes einsetzt, wobei die Messeinrichtung 12/12' mindestens einen der Sensoren 2/2' zum Erfassen von Messwerten 1a/1b/181 aufweist, die einen Zustand der Walze 1/1' charakterisieren. Mindestens eine der Walzen 1/1' der Walzenpaarung kann z.B. mindestens einen Temperatursensor 2a zum Messen der Walzentemperatur 1a1 und/oder einen Vibrationssensor 2b zur Vibrationsdetektion 1a2 und/oder ein Accelerometer 2c zum Überwachung von Drehzahl 18111 und/oder Beschleunigungen/Verzögerungen 1a3 der Walze 1/1' umfassen. Als Ausführungsvariante kann mindestens eine Walze 1/1' den Datensender 4/4', ein Mikroprozessor, einen Energiespeicher, einen Temperatursensor 2a und eine Vibrationssensor 2b umfassen. Der Energiespeicher dient dabei zur Energieversorgung des Datensenders 4/4' und/oder der Sensoren 2/2'. Weiter kann mindestens eine Walze 1/1' im Bereich ihrer distalen Enden jeweils eine Messeinrichtung 12/12' mit einem Temperatursensor 2a umfassen, d.h. mindestens zwei, wobei mittels der mindestens zwei Temperatursensoren 2a der jeweiligen distalen Enden ein Temperaturgradient für die Walze 1/1' messbar ist. Die Steuereinheit 23 kann z.B. derart realisiert sein, dass die Walzentemperatur 1a1, bei dem mindestens einen Sensor 2a kontinuierlich gemessen und überwacht wird, eine real-time Steuerung und/oder eine dynamische real-time Optimierung, z.B. mittels einer maschinell lernenden Einheit 34, erlaubt. Die Walze 1/1' kann z.B. einen RFID-Tag, einen Temperatursensor 2a, ein Beschleunigungssensor 2c und ein Vibrationssensor 2b umfassen, wobei die Steuereinheit 23 basierend auf den Messdaten 1a/1b/181 der Sensoren 2/2' Parameter betreffend der verbleibenden Lebensdauer 1a4 der Walze 1/1' oder/oder Verschleissparameter 1a5 und/oder Betriebsparameter 18 und/oder zum Drehzahl 18112 und/oder Beschleunigungen/Verzögerungen 1a3 der Walze 1/1' und/oder Walzenform 1a6 und/oder Drall 1a7 und/oder Riffelanzahl 1a8 der Walze 1,1 generiert. Die Verschleissparameter 1a5 und/oder Betriebsparameter 181 können z.B. Diagnoseindikatoren für Wickeln 18113 oder andere mechanische Veränderung der Walze 1/1' umfassen.

Mit einem Datenempfänger 5/5' einer Steuereinheit 23 der Produktverarbeitungsanlage 28 werden von einem Datensender 4/4' der Messeinrichtung 12/12' von mindestens einer Walze 1/1' der Walzenpaarung 33 Messwerte empfangen bzw. mit dem Datensender 4/4' übertragen. Z.B. kann mittels des mindestens einen Temperatursensors 2a die Steuereinheit 23 eines Temperaturgradienten 1a13 entlang der Walze 1/1' messen, der an die Steuereinheit 23 übertragen wird (z.B. auch als mindestens zwei Temperaturwerte), wobei Abstand und/oder Parallelität des Walzenpaars 1/1' basierend auf dem gemessenen Temperaturgradienten 1a1 mittels der Steuervorrichtung 23 automatisch korrigiert, optimiert und angepasst wird.

Der Walzenbetrieb und die Breite des Spaltes 18111 zwischen den zwei Walzen 1/1',19 der Walzenpaarung 33 und/oder die Parallelität 18114 der Walzen 1/1',19 wird von der Steuereinheit 23 und/oder einer mit der Steuereinheit 23 verbundenen Regelvorrichtung 231 basierend auf den empfangenen Messwerten automatisiert und selbst-kontrolliert optimiert. Weiter kann die Steuereinheit 23 z.B. mittels RFID 1b oder anderen Identifikationsmitteln 1b, welche an der Walze 1/1' angebracht sind, basierend auf elektronisch gespeicherten Daten des Identifikationsmittels 1b, die Walze 1/1' eindeutig identifizieren, wobei einer Identifikation der Walze 1/1' mindestens die Walzennummer 1b1 und/oder Riffelidentifikation 1b2 zugeordnet sind. Zur Generierung und Vorhersage der verbleibenden Lebensdauer 1a4 der Walze 1/1' und/oder der Verschleissparameter 1a5 und/oder der Betriebsparameter 181 kann die Steuereinheit 23 eine maschinell lernende Einheit 34 umfassen, mittels welcher durch Signalgenerierung an die Regelvorrichtung 231 der Betrieb und die Wartung selbst-adaptiv mindestens in Bezug auf Form 1a6 und/oder Drall 1a7 und/oder Riffelanzahl 1a8 der Walze 1/1' optimierbar sind. Die Optimierung des Betriebs der Walzenpaarung 33 und/oder der Parallelität 18114 der Walzen 1/1',19 kann z.B. von der Steuereinheit 23 und/oder einer mit der Steuereinheit 23 verbundenen Regelvorrichtung 231, basierend auf den empfangenen Messwerten 1a/1b/181, mittels einer maschinell lernenden Einheit 34 erfolgen, wobei die maschinell lernende Einheit 34 eine Überwachungseinheit 341 zum Überwachen der empfangenen Messwerte und eine Lerneinheit 342 umfasst, und wobei die Überwachungseinheit 341 die Temperatur 1a1 während der Zeit t₁, t₂, t₃,... (z.B. auch als Temperaturveränderung, d.h. Erwärmung oder Abkühlung) mit Istwert 1a11 und Sollwert 1a12 der Temperatur 1a1, Spaltbreite 18111 und/oder Drehzahl 18111 und/oder Wickeln 18113 und/oder Parallelität der Walze 18114 zeitlich erfasst und die Lerneinheit 342 den Lernvorgang durch Verknüpfung des Istwerts 1a11 und des Sollwerts 1a12 der Temperatur 1a1, insbesondere während einer Temperaturveränderung, wie z.B. Erwärmung, Spaltbreite 18111 und/oder Drehzahl 18112 und/oder Wickeln 18113 und/oder Parallelität der Walze 18114 durchführt. Beispielsweise können mit dem Datenempfänger 5/5' der Produktverarbeitungsanlage 28 von dem Datensender 4/4' mit mindestens einer Walze 1/1' der Walzenpaarung 33 übertragene Messwerte empfangen werden, wobei der Betrieb der Produktverarbeitungsanlage 28, basierend auf den übertragenen Messwerten, mittels einer selbst-lernenden Struktur der maschinell lernenden Einheit 34 mindestens in Bezug auf Form 1a6 und/oder Drall 1a7 und/oder Riffelanzahl 1a8 der Walze 1/1' optimiert wird. Die mit der Steuereinheit 23 verbundene Regelvorrichtung 231 kann insbesondere z.B. eine Alarmvorrichtung 232 und/oder eine Shut-Down-Vorrichtung 233 umfassen. Wobei beim Triggern entsprechender Alarm-Triggerparameter 2322 und/oder Shut-Down-Triggerparameter 2332, mittels des Alarmtrigger 2321 bzw. des Shut-Down-Trigger 2331 in den Messwerten bzw. Parametern 1a/1b/181 ein entsprechender Alarm mittels einer Alarm-Switch 2323 ausgegeben oder signalisiert bzw. ein Shut-Down der Mahlanlage 18/18' mittels einer Shut-Down-Switch 2333 eingeleitet wird. Dies kann insbesondere dann geschehen, wenn eine entsprechende Abweichung des Istwertes 1a1 der Walzentemperatur 1a mittels des Alarmtrigger 2321 bzw. des Shut-Down-Trigger 2331 getriggert wird. Das Triggern kann insbesondere z.B. dynamisch in Real-Time erfolgen.

Wie in Fig. 1 gezeigt, umfasst die Steuervorrichtung 23 ferner die Vorrichtung für maschinelles Lernen 34. In dieser Patentschrift wird auch der Begriff "maschinell lernende Einheit 34" als Synonym zum Begriff "Vorrichtung für maschinelles Lernen 34" verwendet. Die Vorrichtung für maschinelles Lernen 34 kann eine externe Vorrichtung für die Steuervorrichtung 23 sein. In diesem Fall ist die Vorrichtung für maschinelles Lernen 34 mit der Steuervorrichtung 23 und der Regelvorrichtung 231 bidirektional verbunden, um miteinander zu kommunizieren. Wie in Fig. 1 gezeigt, umfasst die Vorrichtung für maschinelles Lernen 34 eine Überwachungseinheit oder Zustandsbeobachtungseinheit 341 zum Beobachten einer Zustandsvariablen und Messwerte 1a/1b/181, die aus der Temperatur während der Zeit t₁, t₂, t₃,... und einem Istwert 1a11, der Spaltbreite 18111 und/oder Drehzahl 18111 und/oder Parallelität der Walze 18114 besteht. Die Überwachungseinheit 341 kann nacheinander jeden Zustandsparameter zusammen mit einer Zeit t₁, t₂,, t₃,... speichern, zu der die Zustandsparameter überwacht werden (Speichereinheiten mit den Werten 1a12, 1a/1b. 181). Die Vorrichtung für maschinelles Lernen 34 kann weiter eine Lerneinheit 342 zum Ausführen eines Lernvorgangs durch Verknüpfen von mindestens einem der Istwerte 1a11 oder Sollwerte 1a12 der Temperatur 1a1 während der Zeit t₁, t₂, t₃,... und der Spaltbreite 18111 und/oder Drehzahl 18112 und/oder Wickeln 18113 und/oder Parallelität der Walze 18114, welche durch die Überwachungseinheit 341 erfasst werden, umfassen. Die Lerneinheit 342 kann für verschiedene Arten von maschinellem Lernen realisiert sein, wie z.B. überwachtes Lernen, nicht-überwachtes Lernen, teilüberwachtes Lernen, bestärkendes Lernen, transduktives Lernen, Multi-task-Lernen, usw.... Als Ausführungsbeispiel führt die Lerneinheit 342 bestärkendes Lernen mittels Q-Lernen aus. Dies ist jedoch ausdrücklich nur als Ausführungsbeispiel zu verstehen. In diesem Beispiel entspricht die Vorrichtung für maschinelles Lernen 34 einem Agenten im bestärkenden Lernen. Wie in Fig. 1 gezeigt, werden die Messwerte und Parameter 1a/1b/181 in ihrer zeitlichen Abhängigkeit t₁, t₂, t₃,... durch die Überwachungseinheit 341 erfasst und zugeordnet. Die Lerneinheit 342 zum Ausführen des bestärkenden Lernens umfasst eine Belohnungsberechnungseinheit zum Berechnen einer Belohnung basierend auf mindestens einem der Messwerte und einer zugeordneten Temperatur 1a1 (während der gemessenen Zeit (Istwert 1a11) und einem Sollwert 1a12), die durch die Überwachungseinheit 341 beobachtet wird, und eine Funktionsaktualisierungseinheit (künstliche Intelligenz) zum Aktualisieren einer Funktion, beispielsweise einer Aktionswertfunktion (Aktionswerttabelle) zum Entscheiden und Auswahl aus den gegenwärtigen Messwerten und (Betriebs-)Parametern 1a/1b/181, basierend auf der durch die Belohnungsberechnungseinheit berechneten Belohnung, und/oder mindestens eines von einem Sollwert der Temperatur 1a1 während der Zeiten t₁, t₂, t₃,... und/oder der Spaltbreite 18111 und/oder Drehzahl 18112 und/oder Diagnoseindikator für Wickeln 18113 und/oder Parallelität 18114 der Walzen 1,1'. Selbstverständlich kann die Funktionsaktualisierungseinheit andere Funktionen aktualisieren. Die Vorrichtung für maschinelles Lernen 34 umfasst zudem eine Entscheidungsfindungseinheit zum Entscheiden, aus der gegenwärtigen Messwerte und (Betriebs-)Parameter 1a/1b/181, basierend auf dem Ergebnis des Lernens der Lerneinheit 342, des Optimalwerts von mindestens einem von einem Sollwert der Zeit. Die Entscheidungsfindungseinheit 342 lernt die Auswahl einer besseren Aktion (Entscheidungsfindung). Es wird angemerkt, dass die Entscheidungsfindungseinheit in der Steuervorrichtung 23 und nicht in der Vorrichtung für maschinelles Lernen 342 umfasst sein kann. Zur Ausgangslage kann die Vorrichtung für maschinelles Lernen 34 mindestens einen Sollwert, beispielsweise der Temperatur 1a1, oder mehrere Sollwerte z.B. Temperatur 1a1, Spaltbreite 18111, Drehzahl 18112 oder Parallelität 18114 auswählen und dieselben anweisen. Diese Sollwerte werden zufällig aus ihren jeweiligen vorbestimmten Bereichen ausgewählt. Alternativ kann beispielsweise als Sollwert anfangs der Minimalwert in dem vorbestimmten Bereich, d.h. Temperaturbereich, ausgewählt werden, wobei dieser dann einen um einen sehr kleinen Betrag erhöhten Wert im nachfolgenden Zyklus aufweist. Dasselbe gilt für andere mögliche Sollwerte. Die Prozesse können wiederholt werden, so dass alle Kombinationen eines Sollwerts z.B. der Temperatur 1a1, des Temperaturgradients oder der Zeit gewählt werden können.

Um die Temperaturreglung zu erhalten, mit dem die Walzentemperatur bei einem bestimmten Walzgut mit höherer Genauigkeit gesteuert werden kann, indem die oben beschriebene Steuerung durch die Kalibrierung mittels eines Transformationsheizungsmodells zusätzlich optimiert werden. Dabei kann z.B. ein getrenntes Kühlmodell der Walze/Walzenpaarung und/oder des Walzguts mit individuellem Erlernen des genannten Transformationsheizungsmodells realisiert sein. Mit dieser zusätzlichen Optimierung kann die Walzentemperatur mittels einer angepassten Spaltenbreite mindestens initial so gesteuert werden, dass sie mit dem vorgeschriebenen Solltemperaturwert übereinstimmt, während der Betrag der Umwandlungserwärmung durch Vorhersage der Menge kompensiert wird. Die Temperaturaufnahme oder -umwandlung durch die Walze und/oder Walzguts kann dann z.B. mittels einer transformationsheizungsmodell-basierte Lerneinrichtung zum Erlernen des Transformationsheizmodells erreicht werden, wobei die Transformationsheizungsmodell-Lerneinrichtung eine Vorhersage des Betrags der Transformationsheizung erzeugt. Die transformationsheizungsmodell-basierte Lerneinrichtung kann z.B. als Teil der maschinell lernende Einheit 34 oder der Lerneinheit 342 realisiert sein.

Zur Realisierung der Steuervorrichtung 23 mit der Vorrichtung für maschinelles Lernen 34 sind verschiedene Ausführungsformen vorstellbar. Grundsätzlich kann jede Mahlanlage 18/18' zusammen mit einer Steuervorrichtung 23 und einer Vorrichtung für maschinelles Lernen 34 realisiert sein. Die Mahlanlage 18/18' funktioniert in diesem Falle vollständig autark und hat die Selbst-Optimierung und Adaptivität durch on-board Mittel on-site realisiert. Die Steuervorrichtung 23 kann jedoch auch bidirektional mit einer zentralen Master-Einheit, z.B. über ein Datenübertragungs-Netzwerk, verbunden sein. Die Steuervorrichtung 23 übermittelt in diesem Fall ihre Messdaten an die zentrale Master-Einheit, welche die Vorrichtung für maschinelles Lernen 34 umfasst. Nach Durchführung des Optimierungsprozesses mittels der Vorrichtung für maschinelles Lernen 34, kann dann die zentrale Master-Einheit z.B. die notwendigen Steuerparameter, wie z.B. Walzenabstand und/oder Drehgeschwindigkeit und/oder Walzendruck an die Steuervorrichtung 23 der Mahlanlage 18/18' übermitteln, welche dann die Regelung des Mahlprozesses remote übernimmt. Schliesslich können als Ausführungsvariante auch verschiedenen Operation-/Betriebsanpassungsprofile mittels einer zentralen Master-Einheit, welche die Vorrichtung für maschinelles Lernen 34 umfasst, vorgängig und in Abhängigkeit der Walzenidentifikation und/oder des technischen Walzenprofils/-parameter und/oder einer bestimmten Spaltbreite und/oder eines bestimmten Mahlgutes generiert und abgespeichert werden. Derartige Betriebsanpassungsprofile können dann z.B. vorgängig in der Mahlanlage 18/18' oder der Steuervorrichtung 23 der Mahlanlage 18/18' abgespeichert werden. Das Messen bestimmter Messparameter in der Mahlanlage 18/18'bzw. der Messeinrichtung 12/12' triggert in diesem Fall die dynamische Selektion des entsprechenden Betriebsanpassungsprofils, basierend auf welchem die Steuervorrichtung 23 den Betrieb der Mahlanlage 18/18' dynamisch und selbst-adaptiv regelt, insbesondere die Spaltbreite des Walzenpaars und/oder die Drehgeschwindigkeit und/oder den Walzendruck automatisch regelt.

Die Mahlwalze 1, 1' kann mindestens einen Sensor 2, 2', bevorzugt mehrere Sensoren 2, 2', zur Erfassung von Messwerten enthalten, die einen Zustand der Mahlwalze 1, 1' charakterisieren, insbesondere den Zustand einer Umfangsfläche 3, 3' der Mahlwalze 1, 1'. Die Mahlwalze 1, 1' kann mindestens einen Datensender 4, 4' umfassen, bevorzugt einen einzigen Datensender 4, 4', zur berührungslosen Übertragung der Messwerte des mindestens einen Sensors 2, 2' an einen Datenempfänger 5, 5'. Weiter kann die Mahlwalze 1, 1' gemäss der vorgenannten Merkmalskombination ausgebildet mindestens einen Multiplexer 6, 6' umfassen, der zur abwechselnden Übermittlung der durch die Sensoren 2, 2' erfassten Messwerte an den Datensender 4, 4' angeordnet und ausgebildet ist. Die Mahlwalze 1, 1' kann zudem mindestens einen Signalwandler 7, 7' umfassen, insbesondere mindestens einen A/D-Wandler 7, 7' zur Umwandlung der von Sensor 2, 2' erfassten Messwerte. Mahlwalze 1, 1' kann weiter mindestens einen Energieempfänger 9, 9', insbesondere mit Energiespeicher, für eine Energieversorgung des Sensors 2, 2' und/oder mindestens eines Multiplexers 6,6' und/oder mindestens eines Signalwandlers 7, 7' und/oder des Datensenders 4, 4' der Mahlwalze 1, 1' und/oder des Datensenders einer Messeinrichtung 12, 12' umfassen, insbesondere mindestens einen induktiven Energieempfänger 9, 9'. Zur induktiven Energieübertragung können z.B. entsprechende Verfahren des Standes der Technik verwendet werden, indem über ein elektromagnetisches Feld elektrische Energie von einem Sender an den Energieempfänger 9, 9' in der Walze kabellos übertragen wird. Der Sender kann z.B. als Teil der Mahlanlage 18/18' realisiert sein. Dies kann mit der heutigen Technologie so realisiert sein, dass unterwegs keine Hitze erzeugt oder Kabel gezogen werden müssten, so dass zur Energieversorgung des Sensors 2, 2' weder die Walze, z.B. zum Auswechseln einer entsprechenden Batterie, ausgebaut, noch die Mahlanlage 18/18' zum Laden des Energiespeichers des Energieempfänger 9, 9', z.B. mittels Kabel, angehalten werden müsste. Die Mahlwalze 1, 1' kann weiter mindestens eine Leiterplatte 8, 8' umfassen, auf welcher der Sensor 2, 2' und/oder mindestens ein Multiplexer 6, 6' und/oder mindestens ein Signalwandler 7, 7' und/oder mindestens einen Datensender 4, 4' der Mahlwalze 1, 1' und/oder mindestens ein Energieempfänger 9, 9' angeordnet sind. Die Mahlwalze 1, 1' kann weiter einen Walzenkörper 10, 10' mit mindestens einer Aufnahmeöffnung 11, 11' sowie mindestens eine Messeinrichtung 12, 12' umfassen, welche in die Aufnahmeöffnung 11, 11', insbesondere lösbar oder einsetzbar eingesetzt ist, wobei die Messeinrichtung 12, 12' mindestens einen der Sensoren 2, 2' umfasst. Die Aufnahmeöffnung 11' der Mahlwalze 1' kann in einer Umfangsfläche 3' des Walzenkörpers 10' gebildet sein. In den beiden letzteren Ausführungsbeispielen der Mahlwalze 1' kann die Messeinrichtung 12' als Bolzen 12' mit einem Gewinde 13' ausgebildet sein und die Aufnahmeöffnung 11' kann ein Gegengewinde 14' aufweisen, in welches das Gewinde 13' des Bolzens 12' einschraubbar oder anders einsetzbar ist. Die genannte Messeinrichtung 12' der Mahlwalze 1, 1' kann zudem mindestens einen Datensender umfassen und der Walzenkörper 10' mindestens einen Datenempfänger 16', welche derart ausgebildet und angeordnet sind, dass die vom Sensor 2' erfassten Messdaten vom Datensender der Messeinrichtung 12' zum Datenempfänger 16' des Walzenkörpers 10' berührungslos übertragbar sind, insbesondere durch einen Innenraum 17' des Walzenkörpers 10', insbesondere durch eine Hohlraum 17' des Walzenkörpers 10'. Die genannte Messeinrichtung 12, 12' der Mahlwalze 1, 1' kann weiter mindestens eine Leiterplatte 8, 8' umfassen, auf welcher mindestens ein Sensor 2, 2' und/oder mindestens ein Multiplexer 6, 6' und/oder mindestens ein Signalwandler 7, 7' angeordnet sind. Mindestens ein Sensor 2, 2' der Mahlwalze 1, 1' kann z.B. als Temperatursensor 2a und/oder mindestens ein Sensor 2, 2' als Drucksensor 2a und/oder mindestens ein Sensor 2/2' als Kraftsensor 2e und/oder mindestens ein Sensor 2,2' als Verschleisssensor 2f und/oder mindestens ein Sensor 2,2' als Vibrationssensor 2b und/oder mindestens ein Sensor 2,2' als Deformationssensor 2g und/oder mindestens ein Sensor 2,2' als Accelerometer/Beschleunigungssensor 2c ausgebildet ist.

Die Messeinrichtung 12' insbesondere zum lösbaren Einsetzen in eine Aufnahmeöffnung 11' eines Walzenkörpers 10' einer Mahlwalze 1', insbesondere einer der oben beschriebenen Mahlwalze 1', wobei die Messeinrichtung 12' mindestens einen Sensor 2' zur Erfassung von Messwerten aufweist und die einen Zustand der Mahlwalze 1' charakterisieren, insbesondere einen Zustand einer Umfangsfläche 3' der Mahlwalze 1', sowie mindestens einen Datensender zur berührungslosen Übertragung der Messwerte an einen Datenempfänger 5', 16'. Die Mahlanlage 18, 18', kann mindestens eine der oben beschriebenen Mahlwalzen 1, 1' umfassen sowie mindestens einen Datenempfänger 5, 5' zum Empfangen der vom Datensender 4, 4' der Mahlwalze 1, 1' übertragenen Messwerte. Das Verfahren zum Betreiben einer der oben beschriebenen Mahlanlage 18,18' kann z.B. mindestens einen Schritt umfassen, in dem mit dem Datenempfänger 5, 5' der Mahlanlage 18, 18' von einem Datensender 4, 4' der Mahlwalze 1, 1' übertragene Messwerte empfangen werden. Ein Verfahren zum Umrüsten und/oder Aufrüsten eines Walzenkörpers 10, 10' mit mindestens einer Aufnahmeöffnung 11, 11' für eine Messeinrichtung 12, 12' kann z.B. mindestens einen Schritt umfassen, in welchem eine Messeinrichtung 12, 12', insbesondere eine der oben beschriebenen Messeinrichtung 12, 12' in die Aufnahmeöffnung 11, 11' eingesetzt wird, so dass eine Mahlwalze 1, 1' mit den Merkmalen wie oben beschrieben erhalten wird.

Unter "Produkt" wird im Sinne der vorliegenden Erfindung ein Schüttgut oder eine Masse verstanden. Unter "Schüttgut" wird im Sinne der vorliegenden Erfindung ein pulver-, granulat- oder pelletförmiges Produkt verstanden, welches bei der Schüttgut verarbeitenden Industrie, d. h. bei der Verarbeitung von Getreide, Getreidevermahlungsprodukten und Getreideendprodukten der Müllerei (insbesondere Vermahlen von Weichweizen, Durum, Roggen, Mais und/oder Gerste) oder Spezialmüllerei (insbesondere Schalen und/oder Vermahlen von Soja, Buchweizen, Gerste, Dinkel, Hirse/Sorghum, Pseudocerealien und/oder Hülsenfrüchten), der Herstellung von Futter für Nutz- und Haustiere, Fische und Krustentiere, der Verarbeitung von Ölsaaten, der Verarbeitung von Biomasse und Herstellung von Energiepellets, industriellen Mälzerei und Schroterei-Anlagen; der Verarbeitung von Kakaobohnen, Nüssen und Kaffeebohnen, der Herstellung von Düngemitteln, die in der Pharmaindustrie oder in der Feststoffchemie Einsatz findet. Unter "Masse" wird im Sinne der vorliegenden Erfindung eine Lebensmittelmasse, wie etwa eine Schokoladenmasse oder eine Zuckermasse, oder eine Druckfarbe, eine Beschichtung, ein Elektronikmaterial oder eine Chemikalie, insbesondere eine Feinchemikalie verstanden.

Unter "Verarbeitung eines Produktes" wird im Sinne der vorliegenden Erfindung Folgendes verstanden: (i) das Mahlen, Zerkleinern und/oder Flockieren von Schüttgut, insbesondere Getreide, Getreidevermahlungsprodukte und Getreideendprodukte der Müllerei oder Spezialmüllerei wie oben ausgeführt, wofür als Walzenpaarungen beispielsweise die weiter unten noch detaillierter beschriebenen Paarungen von Mahlwalzen oder Flockierwalzen eingesetzt werden können; (ii) die Verfeinerung von Massen, insbesondere von Lebensmittelmassen, wie etwa Schokoladenmassen oder Zuckermassen, wofür beispielsweise Paarungen von Feinwalzen eingesetzt werden können; und (iii) das Nassmahlen und/oder Dispergieren, insbesondere von Druckfarben, Beschichtungen, Elektronikmaterialien oder Chemikalien, insbesondere Feinchemikalien.

Mahlwalzen im Sinne der vorliegenden Erfindung sind dafür ausgelegt, körniges Mahlgut zu vermahlen, welches üblicherweise zwischen einer Mahlwalzenpaarung von zwei Mahlwalzen geführt wird. Mahlwalzen, insbesondere die Mahlwalzen der erfindungsgemässen Mahlwalzenpaarungen, verfügen üblicherweise über eine im Wesentlichen unelastische Oberfläche (insbesondere an ihrer Umfangsfläche), die zu diesem Zweck beispielsweise Metall enthalten kann oder daraus bestehen kann, wie etwa Stahl, insbesondere Edelstahl. Zwischen den Mahlwalzen der Mahlwalzenpaarung besteht üblicherweise ein relativ fester und häufig manuell oder automatisch geregelter Mahlspalt. In vielen Mahlanlagen wird das Mahlgut im Wesentlichen vertikal abwärts durch einen solchen Mahlspalt geführt. Zudem wird das Mahlgut in vielen Mahlanlagen den Mahlwalzen einer Mahlwalzenpaarung mittels seiner Schwerkraft zugeführt, wobei diese Zuführung optional pneumatisch unterstützt werden kann. Das Mahlgut ist üblicherweise körnig und bewegt sich als Fluidstrom durch den Mahlspalt. Durch diese Eigenschaften unterscheiden sich eine Mahlwalze (insbesondere eine Mahlwalze einer erfindungsgemässen Mahlwalzenpaarung) und eine mindestens eine solche Mahlwalze enthaltende Mahlanlage beispielsweise von vielen Walzen, welche üblicherweise zum Transport von Papier verwendet werden.

Mindestens eine der beiden Walzen, d.h. eine oder beide Walzen der Mahlwalzenpaarung, insbesondere mindestens eine oder beide Mahlwalzen der Mahlwalzenpaarung, kann bzw. können beispielsweise als Glattwalze oder als Riffelwalze oder als Walzengrundkörper mit aufgeschraubten Platten ausgebildet sein. Glattwalzen können zylindrisch oder bombiert sein. Riffelwalzen können verschiedene Riffelgeometrien, wie z.B. dachförmige oder trapezförmige Riffelgeometrien, aufweisen und/oder an der Umfangsfläche aufgesetzte Segmente aufweisen. Mindestens eine Walze, insbesondere beide Walzen der Mahlwalzenpaarung, insbesondere mindestens eine Mahlwalze, insbesondere beide Mahlwalzen der Mahlwalzenpaarung, kann bzw. können eine Länge im Bereich von 500 mm bis 2500 mm und einen Durchmesser im Bereich von 250 mm bis 800 mm aufweisen.

Die Umfangsfläche der Walze, insbesondere der Mahlwalze, kann bevorzugt unlösbar mit dem Walzenkörper verbunden sein, insbesondere einstückig damit ausgebildet sein. Dies erlaubt eine einfache Herstellung und eine zuverlässige und robuste Verarbeitung, insbesondere Vermahlung, des Produktes.

Der mindestens eine Sensor ist zur Erfassung von Messwerten ausgebildet, die einen Zustand mindestens einer der Walzen, insbesondere beider Walzen der Walzenpaarung charakterisieren. Insbesondere kann es sich dabei um einen Zustand einer Umfangsfläche mindestens einer der Walzen, insbesondere beider Walzen der Walzenpaarung handeln. Der Zustand kann beispielsweise eine Temperatur, ein Druck, eine Kraft (Kraftkomponente(n) in einer oder mehreren Richtungen), ein Verschleiss, eine Vibration, eine Deformation (Ausdehnung und/oder Auslenkweg), eine Drehgeschwindigkeit, eine Drehbeschleunigung, eine Umgebungsfeuchtigkeit, eine Position oder eine Orientierung mindestens einer der Walzen, insbesondere beider Walzen der Walzenpaarung sein.

Im Gegensatz zum überwiegenden Teil des Standes der Technik enthält mindestens eine Walze der Walzenpaarung, insbesondere mindestens eine Mahlwalze der Mahlwalzenpaarung, selbst mindestens einen Sensor. Wenn die Walze beim Betrieb rotiert, so rotiert auch der Sensor mit. Insbesondere ist der mindestens eine Sensor innerhalb einer Umfangsfläche der Walze angeordnet. Daher befindet sich der mindestens eine Sensor nicht im Produktraum, durch den auch das Produkt, insbesondere das Mahlgut, strömt. Eine Produktverarbeitungsanlage mit mindestens einer solchen Walze, insbesondere eine Mahlanlage mit mindestens einer solchen Mahlwalze, ist somit deutlich weniger anfällig gegenüber Verschmutzungen. Zudem kann die Messung direkt in der Walze erfolgen, was die Messung deutlich präziser macht. Der Sensor kann beispielsweise als MEMS (Micro-Electro-Mechanical System)-Sensor ausgebildet sein. Bevorzugt steht der Sensor in Datenverbindung mit mindestens einem Datensender, wobei der Datensender zur berührungslosen Übertragung der Messwerte des mindestens einen Sensors an einen Datenempfänger ausgebildet ist.

Die Messwerte können mit Hilfe des mindestens einen Datensenders berührungslos an einen Datenempfänger übertragen werden, der nicht Bestandteil der Walze ist. Insbesondere kann es sich um einen ruhenden Datenempfänger handeln, gegenüber dem der mindestens eine Sensor bei Rotation der Walze bewegt wird. Durch die berührungslose Übertragung können aufwendige Drehdurchführungen für Kabel vermieden werden, die ansonsten nötig waren. Bevorzugt kann der Datensender aber auch an oder in derselben Walze wie der damit in Datenverbindung stehende Sensor angeordnet sein.

Mindestens eine der beiden oder beide Walzen können einen oder mehrere wie oben beschriebene Sensoren, beispielsweise vier oder sechs Sensoren, enthalten. Weiter können eine oder mehrere Sensoren in Datenverbindung mit mindestens einem Datensensor stehen. Die Sensoren können an verschiedenen Positionen entlang einer Rotationsachse der Walze und/oder an verschiedenen Winkeln um diese Rotationsachse herum angeordnet sein. Je mehr Sensoren die Walze enthält und je gleichmässiger diese verteilt sind, desto genauere Messungen können durchgeführt werden. Bevorzugt können die Sensoren in Umfangsrichtung gleichmässig angeordnet sein, wodurch ein Rotationsgleichgewicht entsteht.

Die Sensoren können (i) mindestens ein Temperatursensor, bevorzugt aber mehrere Temperatursensoren, umfassen, welche entlang einer Rotationsachse der Walze angeordnet sind, um ein Temperaturprofil entlang diese Richtung zu ermitteln; (ii) ein oder mehrere Drucksensoren; (iii) ein oder mehrere Kraftsensoren (zur Bestimmung der Kraftkomponente(n) in eine oder mehrere Richtungen); ein oder mehrere Verschleisssensoren; (iv) ein oder mehrere Vibrationssensoren, insbesondere zum Ermitteln eines Wickelns, also einer Anhaftung des verarbeiteten Produktes an der Umfangsfläche der Walze, was das Verarbeiten, insbesondere Vermahlen, an dieser Position behindert; (v) ein oder mehrere Deformationssensoren (zur Bestimmung einer Ausdehnung und/oder eines Auslenkwegs); (vi) ein oder mehrere Drehgeschwindigkeitssensoren, insbesondere zum Ermitteln eines Stillstandes der Walze; (vii) ein oder mehrere Drehbeschleunigungssensoren; (viii) ein oder mehrere Sensoren zum Ermitteln einer Umgebungsfeuchtigkeit, der bevorzugt an einer Stirnseite der Walze angeordnet ist; (ix) ein oder mehrere gyroskopischer Sensoren zum Ermitteln der Position und/oder der Orientierung der Walze, insbesondere zum Ermitteln der von der Position und/oder der Orientierung abhängigen Breite eines Spaltes zwischen den beiden Walzen der Walzenpaarung sowie der Parallelität der Walzen; und/oder (x) ein oder mehrere Sensoren zum Ermitteln der Breite eines Spaltes zwischen den beiden Walzen der Walzenpaarung, insbesondere eines Mahlspaltes zwischen den beiden Mahlwalzen der Mahlwalzenpaarung, beispielsweise ein in einer Stirnseite der Walze angeordneter Sensor, insbesondere ein MEMS-Sensor.

Beliebige Kombinationen davon sind ebenfalls möglich. Beispielsweise kann die Walze mehrere Temperatursensoren und Deformationssensoren enthalten. Zudem ist es möglich und liegt im Rahmen der Erfindung, dass alle Sensoren vom gleichen Typ sind, also beispielsweise als Temperatursensor ausgebildet sind. Es ist jedoch ebenso möglich und liegt im Rahmen der Erfindung, dass mindestens eine Walze, insbesondere beide Walzen, Sensoren verschiedener Typen enthält bzw. enthalten.

Unter einem Verschleiss wird hier und im Folgenden die mechanische Abnutzung der Umfangsfläche der Walze, insbesondere der Mahlwalze, verstanden. Ein solcher Verschleiss kann beispielsweise über eine Widerstandsänderung, insbesondere eine elektrische Widerstandsänderung, bestimmt werden, die durch einen Materialabtrag an der Umfangsfläche entsteht. Alternativ oder zusätzlich kann ein Verschleiss über einen veränderten Druck und/oder über eine veränderte Weglänge und/oder über eine veränderte elektrische Kapazität bestimmt werden.

Falls eine oder beide Walzen sowohl mehrere Sensoren als auch mindestens einen Datensender enthält bzw. enthalten, so kann mindestens einer oder alle Datensender zur berührungslosen Übertragung der Messwerte von mehreren Sensoren, an einem Datenempfänger ausgebildet sein. Mindestens eine Walze kann einen Datensender zur berührungslosen Übertragung der Messwerte enthalten. Je weniger Datensender die Walze enthält, desto einfacher ist der Aufbau dieser Walze.

Wenn mindestens eine Walze nur einen einzigen Datensender enthält, so kann diese Walze mindestens einen Multiplexer enthalten, der zur abwechselnden Übermittlung der von den Sensoren erfassten Messwerte an den Datensender angeordnet und ausgebildet ist.

Die berührungslose Übertragung kann beispielsweise durch Infrarotstrahlung, durch Lichtpulse, durch Radiofrequenzsignale, durch induktive Kopplung oder durch eine beliebige Kombination davon erfolgen.

Die berührungslose Übertragung der Messwerte umfasst hier und im Folgenden stets auch die Übertragung von Daten, welche durch eine entsprechende Verarbeitung der Messwerte gewonnen werden und die somit auf den Messwerten beruhen. Beispielsweise kann mindestens eine Walze, insbesondere beide Walzen, mindestens einen Signalwandler, insbesondere mindestens einen A/D-Wandler (Analog-Digital-Wandler; auch ADC (Analog-to-Digital Converter), zur Umwandlung der von dem mindestens einen Sensor erfassten Messwerte enthalten. Jedem Sensor kann mindestens ein Signalwandler zugeordnet sein, der die von diesem Sensor erfassten Messwerte umwandelt. Anschliessend können die umgewandelten Signale einem wie bereits oben beschriebenen Multiplexer zugeführt werden. Handelt es sich bei den Signalwandlern um einen A/D-Wandler, so kann der Multiplexer ein digitaler Multiplexer sein. In einer zweiten möglichen Variante kann der Signalwandler auch zwischen einem wie oben beschriebenen Multiplexer und dem Datensender angeordnet sein. In diesem Falle kann der Multiplexer ein analoger Multiplexer sein.

Mindestens eine Walze kann einen, weiter unten beschriebenen Walzenkörper und/oder mindestens eine Walze und/oder mindestens einen Energieempfänger und/oder mindestens einen Energieerzeuger enthalten. Damit kann eine Energieversorgung des mindestens einen Sensors und/oder mindestens eines Multiplexers und/oder mindestens eines Signalwandlers und/oder des mindestens einen Datensenders und/oder mindestens eines Datensenders einer weiter unten beschriebenen Messeinrichtung erreicht werden. Insbesondere kann es sich um einen induktiven Energieempfänger handeln. In dieser Variante kann der Energieempfänger beispielsweise mindestens eine Empfangsspule aufweisen, mit deren Hilfe elektromagnetische Energie induktiv eingekoppelt werden kann. Alternativ oder zusätzlich kann der Energieempfänger aber auch zum Empfang von Lichtenergie ausgebildet sein. Alternativ oder zusätzlich ist es jedoch auch möglich und liegt im Rahmen der Erfindung, dass mindestens eine Wahlwalze, insbesondere beide Walzen, mindestens eine insbesondere wieder aufladbare Batterie enthält bzw. enthalten, mit deren Hilfe die genannte Energieversorgung erreicht werden kann.

Der Energieerzeuger zur Energiegewinnung kann aus der Bewegung der Walze ausgebildet sein. Beispielsweise kann der Energieerzeuger ausgebildet sein zur Energiegewinnung aus (i) thermischen Differenzen innerhalb der Walze, insbesondere unter Ausnutzung von thermoelektrischen Effekten, wie z.B. des Seebeck-Effektes, Peltier-Effektes oder des Thomson-Effektes, beispielsweise mit Hilfe eines Thermoelementes, und/oder (ii) Vibrationen der Walze, beispielsweise mit Hilfe mindestens eines Piezoelementes und/oder mechanisch, und/oder, (iii) der Rotation der Walze, beispielsweise mit Hilfe mindestens eines Piezoelementes und/oder mechanisch. Die Walze kann sowohl mindestens einen Energieempfänger und/oder mindestens einen Energieerzeuger als auch mindestens eine wieder aufladbare Batterie enthalten, die vom Energieempfänger und/oder Energieerzeuger aufladbar ist.

Mindestens eine Walze kann mindestens eine Leiterplatte (insbesondere eine MEMS-Leiterplatte) umfassen, auf welcher der mindestens eine Sensor und/oder mindestens ein Multiplexer und/oder mindestens ein Signalwandler und/oder der mindestens eine Datensender und/oder mindestens ein Energieempfänger und/oder mindestens ein Energieerzeuger angeordnet sind. Die Leiterplatte kann Messleitungen enthalten, über die die Sensoren mit dem Multiplexer verbunden sind. Eine solche Leiterplatte hat den Vorteil, dass die genannten Bauteile hierauf sehr kompakt angeordnet werden können und dass die Leiterplatte als separate Baugruppe gefertigt und zumindest in einigen Ausführungsbeispielen bei Bedarf wieder ausgetauscht werden kann. Alternativ zu einer Leiterplatte können die Sensoren aber auch über einen Kabelbaum mit dem Datensender und/oder dem Multiplexer verbunden sein.

Mindestens eine der Walzen kann einen Walzenkörper mit mindestens einer Aufnahmeöffnung sowie mindestens einer Messeinrichtung umfassen, welche in die Aufnahmeöffnung insbesondere lösbar einsetzbar oder eingesetzt ist. Die Umfangsfläche des Walzenkörpers bildet zumindest einen Teil der Umfangsfläche der Walze, insbesondere die gesamte Umfangsfläche der Walze. Die Messeinrichtung enthält mindestens einen der Sensoren der Walze. Zudem kann sie mindestens einen Multiplexer und/oder mindestens einen Signalwandler enthalten. Dieser mindestens zweiteilige Aufbau der Walze ermöglicht ebenfalls die Herstellung separater Baugruppen. Insbesondere wenn die Messeinrichtung lösbar in der Aufnahmeöffnung eingesetzt ist, kann sie leicht ausgetauscht werden, falls sie beispielsweise gereinigt oder gewartet werden muss oder defekt ist.

Die Aufnahmeöffnung kann z.B. im Wesentlichen durch eine zylinderförmige Bohrung gebildet sein, die einen Durchmesser im Bereich von 5 mm bis 40 mm, bevorzugt von 5 mm bis 25 mm, besonders bevorzugt von 10 mm bis 18 mm aufweisen kann. Diese Bohrung kann sich im Wesentlichen parallel zu einer Rotationsachse des Walzenkörpers erstrecken. Um den Zustand einer Umfangsfläche bestimmen zu können, ist die Aufnahmeöffnung bevorzugt in einem Aussenbereich des Walzenkörpers angeordnet. So kann sich die Aufnahmeöffnung beispielsweise in einem zylinderringförmigen Bereich des Walzenkörpers befinden.

Die Aufnahmeöffnung kann sich im Wesentlichen entlang der gesamten Länge des Walzenkörpers in Richtung der Rotationsachse erstrecken, das heisst entlang von mindestens 50 %, bevorzugt mindestens 70 %, besonders bevorzugt bis 100 % der gesamten Länge des Walzenkörpers. Auf diese Weise kann auch der Zustand der Walze im Wesentlichen entlang ihrer gesamten Länge bestimmt werden.

Die Messeinrichtung kann stabförmig ausgebildet sein und eine Langsachse aufweisen, entlang derer mehrere Sensoren, beispielsweise Temperatursensoren, angeordnet sind.

Die Aufnahmeöffnung kann z.B. auch in einer Umfangsfläche des Walzenkörpers gebildet sein. Insbesondere kann sie sich im Wesentlichen in radialer Richtung des Walzenkörpers erstrecken, das heisst im Wesentlichen senkrecht zu einer Rotationsachse des Walzenkörpers. Wenn eine Messeinrichtung in eine derartige Aufnahmeöffnung eingesetzt ist, kann besonders einfach ein Zustand der Umfangsfläche der Walze gemessen werden, beispielsweise eine an der Umfangsfläche herrschende Temperatur.

Der Walzenkörper kann sowohl mindestens eine radiale Aufnahmeöffnung enthalten, die in einer Umfangsfläche des Walzenkörpers gebildet ist und in welcher mindestens einer der Sensoren angeordnet ist, sowie mindestens eine axiale, also parallel zur Rotationsachse verlaufende Aufnahmeöffnung, in der die Leiterplatte angeordnet ist. Die Sensoren können entweder mit der Leiterplatte verbunden oder derart ausgebildet und relativ zur Leiterplatte angeordnet sein, dass sie berührungslos damit kommunizieren können, beispielsweise durch Ultraschall, Infrarotstrahlung, induktive Kopplung, Radiofrequenzsignale oder durch eine beliebige Kombination davon.

Die Messeinrichtung kann als Bolzen mit einem Gewinde ausgebildet sein, und die Aufnahmeöffnung kann ein Gegengewinde aufweisen, in welches das Gewinde des Bolzens einschraubbar ist. Alternativ oder zusätzlich kann die Messeinrichtung als Bolzen mit einem ersten Bajonettverschlusselement ausgebildet sein, und die Aufnahmeöffnung kann ein zweites Bajonettverschlusselement aufweisen, in welchem das erste Bajonettverschlusselement des Bolzens einsetzbar ist. Das erste und/oder das zweite Bajonettverschlusselement kann eine Sicherung aufweisen. Diese Ausführungsform als Bolzen ist besonders dann geeignet, wenn der Bolzen einen als Verschleisssensor, als Drucksensor oder als Temperatursensor ausgebildeten Sensor enthält.

Die Messeinrichtung, insbesondere der Bolzen, kann z.B. mindestens einen weiteren Datensender und mindestens einen weiteren Datenempfänger aufweisen. Dabei sind der Datensender der Messeinrichtung und der Datenempfänger derart ausgebildet und angeordnet, dass die vom Sensor erfassten Messdaten von mindestens einem weiteren Datensender zu mindestens einem weiteren Datenempfänger berührungslos übertragbar sind. Dies ist besonders dann von Vorteil, wenn die Messeinrichtung nur lösbar in die Aufnahmeöffnung einsetzbar ist; beim Einsetzen müssen dann nämlich keine Kabelverbindungen eingerichtet werden, insbesondere keine Kabelverbindungen zwischen der Messeinrichtung und dem Walzenkörper.

Die berührungslose Übertragung vom weiteren Datensender zum weiteren Datenempfänger kann insbesondere durch einen Innenraum des Walzenkörpers, insbesondere durch einen Hohlraum des Walzenkörpers erfolgen. Eine Übertragung durch einen Hohlraum ist nur wenig störanfällig und erfordert zudem nur eine vergleichsweise geringe Sendeleistung. Die berührungslose Übertragung vom weiteren Datensender zu einem weiteren Datenempfänger kann beispielsweise durch Infrarotstrahlung, durch Lichtpulse, durch Radiofrequenzsignale, durch induktive Kopplung oder durch eine beliebige Kombination davon erfolgen.

Die Messeinrichtung, insbesondere der Bolzen, kann induktiv und/oder über Licht mit Energie versorgt werden. Alternativ oder zusätzlich kann die Messeinrichtung, insbesondere der Bolzen, einen wie oben beschriebenen Energieempfänger und/oder einen wie oben beschriebenen Energieerzeuger enthalten, der zur Energiegewinnung aus der Bewegung der Walze ausgebildet ist, beispielsweise aus (i) thermischen Differenzen innerhalb der Walze, insbesondere unter Ausnutzung von thermoelektrischen Effekten, wie z.B. des Seebeck-Effektes, Peltier-Effektes oder Thomson-Effektes, beispielsweise mit Hilfe eines Thermoelementes, und/oder (ii) Vibrationen der Walze, beispielsweise mit Hilfe mindestens eines Piezoelementes und/oder mechanisch, und/oder (iii) der Rotation der Walze, beispielsweise mit Hilfe mindestens eines Piezoelementes und/oder mechanisch.

Alternativ oder zusätzlich kann die Messeinrichtung, insbesondere der Bolzen, mindestens eine insbesondere wieder aufladbare Batterie aufweisen. Weiter alternativ oder zusätzlich zu einem im Walzenkörper integrierten Datenempfänger kann eine die Walzenpaarung enthaltende Produktverarbeitungsanlage, insbesondere eine die Mahlwalzenpaarung enthaltende Mahlanlage, auch einen Datenempfänger aufweisen, der ausserhalb der Walze angeordnet ist. Ein solcher Datenempfänger kann stabförmig ausgebildet sein und sich insbesondere senkrecht zu einer Rotationsachse der Walze erstrecken.

Falls mehrere Aufnahmeöffnungen vorhanden sind, so können diese an verschiedenen Positionen entlang einer Rotationsachse des Walzenkörpers und/oder an verschiedenen Winkeln um diese Rotationsachse herum angeordnet sein. Je gleichmässiger die Aufnahmeöffnungen verteilt sind, desto aussagekräftiger sind die von den in diesen Aufnahmeöffnungen eingesetzten Messeinrichtungen erfassten Messwerte. Bevorzugt sind die Aufnahmeöffnungen in Umfangsrichtung gleichmässig angeordnet, wodurch ein Rotationsgleichgewicht entsteht, so dass auf ein ansonsten erforderliches Auswuchten verzichtet werden kann.

Der mindestens eine Datensender und/oder der Datenempfänger und/oder der Energieempfänger und/oder der Energieerzeuger sind bevorzugt an einer Stirnseite dieser Walze(n), insbesondere an einer Stirnseite eines Walzenkörpers dieser Walze(n), angeordnet. An einer solchen Stirnseite wird die berührungslose Übertragung der Messwerte kaum oder gar nicht durch das mit der Walze gemahlene Produkt behindert.

Eine wie oben bereits beschriebene Leiterplatte kann in einer Ausführungsform Bestandteil der Messeinrichtung sein. Auf dieser Messeinrichtung kann der mindestens eine Sensor und/oder mindestens ein Multiplexer (insbesondere mindestens ein wie oben beschriebener Multiplexer) und/oder mindestens ein Signalgeber (insbesondere mindestens ein wie oben beschriebener Signalgeber) angeordnet sein.

Die Walze kann mindestens einen Datenspeicher enthalten, insbesondere einen RFID-Chip. In diesem Datenspeicher kann beispielsweise eine insbesondere individuelle Identifikation der Walze gespeichert oder speicherbar sein. Alternativ oder zusätzlich kann im Datenspeicher mindestens eine Eigenschaft der Walze gespeichert oder speicherbar sein, wie etwa mindestens eine ihrer Dimensionen und/oder ihre Bombierung. Die im Datenspeicher gespeicherten Daten werden bevorzugt ebenfalls berührungslos übertragen. Hierzu kann die Walze einen Datensender aufweisen. Dabei ist es denkbar, dass die Daten des Datenspeichers mittels des gleichen Datensenders übertragen werden, mittels dem erfindungsgemäss die Messwerte des mindestens einen Sensors übertragen werden.

Die Messeinrichtung kann z.B. lösbar in eine Aufnahmeöffnung eines Walzenkörpers einer Walze einer Walzenpaarung eingesetzt sein. Insbesondere kann die Aufnahmeöffnung in einer Umfangsfläche des Walzenkörpers gebildet sein. Bei der Walze kann es sich um eine Mahlwalze einer wie oben beschriebenen Mahlwalzenpaarung handeln. Bei dem Walzenkörper kann es sich um den Walzenkörper einer solchen Mahlwalze handeln.

Die Messeinrichtung weisst mindestens einen Sensor zur Erfassung von Messwerten auf, die einen Zustand der Walze charakterisieren, insbesondere einen Zustand einer Umfangsfläche der Walze. Zudem kann die Messeinrichtung mindestens einen Datensender zur insbesondere berührungslosen Übertragung der Messwerte an einen Datenempfänger aufweisen. Die Daten können in einer ersten Variante an einen wie oben beschriebenen ruhenden Datenempfänger übertragen werden. In einer zweiten Variante können die Daten aber auch an einen wie ebenfalls oben beschriebenen Datenempfänger übertragen werden, insbesondere an einen wie oben beschriebenen weiteren Datenempfänger oder an einen Datenempfänger des Walzenkörpers.

Die Messeinrichtung kann auch einen darin integrierten Datenprozessor enthalten, insbesondere einen Mikroprozessor, einen FPGA, einen PLC-Prozessor oder einen RISC-Prozessor. Dieser Datenprozessor kann beispielsweise die von dem mindestens einen Sensor erfassten Messwerte weiterverarbeiten und dann optional an den Datensender übertragen, insbesondere, wenn dieser in der Walze enthalten ist. Insbesondere kann der Datenprozessor die Funktion des oben beschriebenen Multiplexers und/oder des oben beschriebenen Signalwandlers ganz oder teilweise übernehmen. Der Mikroprozessor kann Bestandteil der ebenfalls oben beschriebenen Leiterplatte sein. Der Mikroprozessor kann alternativ oder zusätzlich auch mindestens eine der folgenden Funktionen übernehmen: Kommunikation mit mindestens einem Datenbussystem (insbesondere Verwaltung von IP-Adressen); Leiterplattenspeicherverwaltung; Steuerung von insbesondere wie unten beschriebenen Energiemanagementsystemen; Verwaltung und/oder Speicherung von Identifikationsmerkmalen der Walze(n), wie beispielsweise geometrischen Daten und Walzengeschichte; Verwaltung von Schnittstellenprotokolle; drahtlose Funktionalitäten.

Ferner kann die Messeinrichtung, insbesondere die Leiterplatte, über ein Energiemanagementsystem verfügen, welches eine, mehrere oder sämtliche der folgenden Funktionen durchführen kann: (i) regelmässige, insbesondere periodische, Übertragung der Messwerte vom Datensender; (ii) Übertragung der Messwerte vom Datensender nur bei Vorliegen einer vorgegebenen Bedingung, insbesondere bei Erfüllung eines weiter unten noch beschriebenen Warnkriteriums; (iii) regelmässige, insbesondere periodische Ladung und Entladung eines Kondensators oder eines Energiespeichers.

Die Produktverarbeitungsanlage für die Verarbeitung eines Produktes, insbesondere die Mahlanlage für das Vermahlen von Mahlgut, enthält mindestens eine wie oben beschriebene Walzenpaarung, insbesondere eine Mahlwalzenpaarung. Zwischen den Walzen der Walzenpaarung ist ein Spalt gebildet. Insbesondere ist zwischen den Mahlwalzen einer Mahlwalzenpaarung ein Mahlspalt gebildet. Im Rahmen der Erfindung muss nur eine der beiden Walzen der Walzenpaarung ausgebildet sein; die Erfindung erfasst jedoch auch Ausführungsformen, in denen beide Walzen der Walzenpaarung erfindungsgemäss ausgebildet sind, also mindestens einen wie oben beschriebenen Sensor und optional mindestens einen wie oben geschriebenen Datensender enthalten. Insbesondere beim Vermahlen von Mahlgut wird dieses Mahlgut im Wesentlichen vertikal abwärts durch einen solchen Mahlspalt geführt. Zudem wird insbesondere beim Vermahlen von Mahlgut dieses Mahlgut den Mahlwalzen bevorzugt mittels seiner Schwerkraft zugeführt, wobei dies optional pneumatisch unterstützt werden kann. Das Produkt, insbesondere das Schüttgut, insbesondere das Mahlgut, kann körnig sein und sich als Fluidstrom durch den Mahlspalt bewegen. Insbesondere bei der Verfeinerung von Massen wie etwa Schokoladenmassen oder Zuckermassen, kann diese Masse alternativ auch von unten nach oben durch den zwischen den Walzen gebildeten Spalt geführt werden.

Zusammenfassend kann die Messvorrichtung (i) mindestens einen Signalwandler enthalten, und/oder (ii) als Bolzen mit einem Gewinde ausgebildet sein, welches in ein Gegengewinde der Aufnahmeöffnung des Walzenkörpers einschraubbar ist, und/oder (iii) als Bolzen mit einem ersten Bajonettverschlusselement ausgebildet sein, welches in ein zweites Bajonettverschlusselement der Aufnahmeöffnung des Walzenkörpers einsetzbar ist, und/oder (iv) mindestens eine Leiterplatte enthält, auf welcher der mindestens eine Sensor und/oder mindestens eine Multiplexer, und/oder (v) mindestens eine Signalwandler angeordnet ist, und/oder (vi) mindestens einen Sensor enthält, der als Temperatursensor ausgebildet ist, wobei bevorzugt mehrere Temperatursensoren vorhanden sind, welche entlang einer Rotationsachse der Walze angeordnet sind, um ein Temperaturprofil entlang dieser Richtung ermitteln zu können, und/oder (vii) mindestens einen Sensor enthalten, der als Drucksensor ausgebildet ist, und/oder (viii) mindestens einen Sensor enthalten, der als Kraftsensor ausgebildet ist (zur Bestimmung der Kraftkomponente(n) in einer oder mehreren Richtungen), und/oder (ix) mindestens einen Sensor enthält, der als Verschleisssensor ausgebildet ist, und/oder (x) mindestens einen Sensor enthält, der als Vibrationssensor ausgebildet ist, insbesondere zum Ermitteln eines Wickelns, also einer Anhaftung des verarbeiteten Produktes an der Umfangsfläche der Walze, was das Verarbeiten, insbesondere Vermahlen, an dieser Position behindert, und/oder (xi) mindestens einen Sensor enthält, der als Deformationssensor ausgebildet ist (zur Bestimmung einer Ausdehnung und/oder eines Auslenkwegs) und /oder (xii) mindestens einen Sensor enthält, der als Drehgeschwindigkeitssensor ausgebildet ist, insbesondere zum Ermitteln eines Stillstandes der Walze, und/oder (xiii) mindestens einen Sensor enthält, der zum Ermitteln einer Umgebungsfeuchtigkeit ausgebildet ist und bevorzugt an einer Stirnseite der Walze angeordnet ist, und/oder (xiv) mindestens einen Sensor enthält, der als gyroskopischer Sensor zum Ermitteln der Position und/oder der Orientierung der Walze ausgebildet ist, insbesondere zum Ermitteln der von der Position und/oder der Orientierung abhängigen Breite eines Spaltes zwischen den beiden Walzen der Walzenpaarung sowie der Parallelität der Walzen, und/oder (xv) mindestens einen Sensor zum Ermitteln der Breite eines Spaltes zwischen den beiden Walzen der Walzenpaarung enthält, insbesondere eines Mahlspaltes zwischen den beiden Mahlwalzen der Mahlwalzenpaarung, beispielsweise ein in einer Stirnseite der Walze angeordneter Sensor, insbesondere ein MEMS-Sensor.

Die Messeinrichtung kann an oder ausserhalb mindestens einer Endöffnung der Aufnahmeöffnung mindestens einen Datensender zur insbesondere berührungslosen Übertragung der Messwerte an einen Datenempfänger enthalten.

Die Erfindung betrifft z.B. Produktverarbeitungsanlagen, insbesondere Mahlanlagen für das Vermahlen von Mahlgut. Die Produktverarbeitungsanlage enthält mindestens eine wie oben beschriebene Walzenpaarung. Zusätzlich kann die Produktverarbeitungsanlage mindestens einen insbesondere ruhenden Datenempfänger zum Empfangen der vom Datensender mindestens einer der Walzen, insbesondere beider Walzen, der Walzenpaarung übertragenen Messwerte aufweisen. Mit einer solchen Produktverarbeitungsanlage können die bereits oben beschriebenen Vorteile erreicht werden. Insbesondere wenn die Mahlanlage mehrere verschiedene Walzenpaarungen enthält, denen das Produkt aus dem gleichen Produkteinlass zugeführt wird, kann es vorteilhaft sein, wenn nur eine der Walzenpaarungen erfindungsgemäss ausgebildet ist.

Bei der Mahlanlage kann es sich beispielsweise um einen einzelnen Walzenstuhl einer Getreidemühle oder auch um eine ganze Getreidemühle mit mindestens einem Walzenstuhl handeln, wobei mindestens ein Walzenstuhl mindestens eine wie oben beschriebene Mahlwalze enthält. Die Produktverarbeitungsanlage kann aber auch ausgebildet sein als (i) ein Flockierwalzwerk für das Flockieren von Schüttgut, insbesondere Getreide, Getreidevermahlungsprodukten und Getreideendprodukten der Müllerei oder Spezialmüllerei wie oben ausgeführt, (ii) eine Walzenmühle oder ein Walzwerk für die Herstellung von Schokolade, insbesondere ein Vorwalzwerk mit beispielsweise zwei oder fünf Walzen, insbesondere zwei oder fünf Feinwalzen, oder ein End-Feinwalzwerk, (iii) ein Walzwerk für das Nassmahlen und/oder Dispergieren, beispielsweise von Druckfarben, Beschichtungen, Elektronikmaterialien oder Chemikalien, insbesondere Feinchemikalien, insbesondere ein Dreiwalzwerk.

Die Erfindung betrifft auch ein Verfahren zum Betreiben einer wie oben beschriebenen Produktverarbeitungsanlage, insbesondere einer oben beschriebenen Mahlanlage. Das Verfahren umfasst einen Schritt, in dem mit dem Datenempfänger der Produktverarbeitungsanlage von einem Datensender mindestens eine der Walzen, insbesondere beide Walzen, der Walzenpaarung übertragene Messwerte empfangen werden. Die somit empfangenen Daten werden anschliessend weiterverarbeitet und ausgewertet. Zu diesem Zweck können sie einer Steuereinheit der Produktverarbeitungsanlage, insbesondere der Mahlanlage, zugeführt werden, von wo aus sie noch weiter an ein optionales übergeordnetes Leitsystem weitergegeben werden können. Mit Hilfe der Steuereinheit und/oder des Leitsystems kann die gesamte Produktverarbeitungsanlage, insbesondere die gesamte Mahlanlage, oder ein Teil davon gesteuert und/oder geregelt werden.

Von der Steuereinheit kann z.B. eine Warnmeldung ausgegeben werden, falls ein vorgegebenes Warnkriterium erfüllt ist. Das Warnkriterium kann beispielsweise darin bestehen, dass der Messwert mindestens eines der Sensoren einen für diesen Sensor vorgegebenen Grenzwert überschreitet. In einer anderen Variante kann das Warnkriterium darin bestehen, dass die Differenz zwischen dem grössten Messwert und dem kleinsten Messwert, die von einer vorgegebenen Menge von Sensoren gemessen werden, einen vorgegebenen Grenzwert übersteigt.

Falls das Warnkriterium erfüllt ist, kann ein Warnsignal ausgegeben werden (beispielsweise optisch und/oder akustisch) und/oder die Produktverarbeitungsanlage kann zum Stillstand gebracht werden (beispielsweise durch die Steuereinheit). Ausserdem kann die Steuereinheit die von mindestens einem Sensor erfassten Messwerte oder daraus gewonnenen Daten visualisieren.

Die Produktverarbeitungsanlage kann produktstrom-abwärts von der erfindungsgemässen Walzenpaarung mindestens eine Vorrichtung zur Messung von Partikelgrössen und deren Verteilungen enthalten. Hierdurch kann die Messung der Partikelgrössen und deren Verteilungen beispielsweise mit einer Messung des Verschleisszustandes und/oder des Walzenanpressdrucks kombiniert werden. Dies ist insbesondere dann von Vorteil, wenn die Walze, insbesondere die Mahlwalze, eine Riffelwalze ist. Alternativ oder zusätzlich kann produktstrom-abwärts von der erfindungsgemässen Walze, insbesondere der erfindungsgemässen Mahlwalze, auch eine Vorrichtung zur NIR-Messung des Produktstromes, insbesondere des Mahlgutstromes, angeordnet sein. Dies ist besonders dann vorteilhaft, wenn es sich bei Walzen, insbesondere den Mahlwalzen, um Glattwalzen handelt. Beide Varianten ermöglichen aufgrund der Erkennung des Verschleisszustandes eine frühzeitige Planung der Wartung.

Gemäss der Erfindung wird die Oberflächentemperatur wenigstens einer Walze eines Walzenstuhles und/oder einer Mahlvorrichtung und/oder die Temperatur eines Mahlproduktes gemessen bzw. bestimmt, und zwar mit wenigstens zwei Temperaturfühlern oder -sensoren, welche an unterschiedlichen Stellen der wenigstens einen Walze oder des Produktschleiers, wie oben beschrieben, die Temperatur messen. Gemäß der erfindungsgemässen Produktverarbeitungsanlage ist es möglich, die Temperatur dort zu erfassen und zu überwachen, wo sie erzeugt wird, nämlich an der Oberfläche der Walzen. Die Temperaturerfassung und -Überwachung wird nach dem erfindungsgemäßen Verfahren während des Mahlverfahrens durchgeführt. Die Temperatur der Oberfläche der wenigstens einen Walze wird erfasst und überwacht, wobei zusätzlich die Temperatur des Mahlproduktes überwacht werden kann, da die Walze Wärme auf das Mahlprodukt überträgt und durch die Messung der Temperatur des Mahlproduktes ein Rückschluss auf die Temperatur der Mahlwalzen möglich ist.

Mit der erfindungsgemässen Produktverarbeitungsanlage ist es möglich, objektiv die Temperaturverteilung von Mahlwalzen kontinuierlich während des Mahlvorganges beispielsweise einer Produktcharge zu überwachen.

Dabei können weitere Parameter gemessen und überwacht werden. Zum Beispiel kann in die Überwachung zusätzlich die Innenraumtemperatur des Gehäuses des Walzenstuhles und/ oder die Raumtemperatur, also die Außentemperatur eingehen, da diese Temperaturwerte Einflüsse auf die Temperatur der Mahlwalzen haben. Mit der Überwachung und Kontrolle der Temperatur der Walzenoberflächen ist es möglich, die Walzenarbeit und den Walzenbetrieb optimal zu gestalten und zu steuern. Werden unterschiedliche Temperaturwerte über die Breite der wenigstens einen Walze und/oder des Produktschleiers erfasst, werden die Walzen von der obengenannten Steuerungseinheit mit einer entsprechenden Regeleinrichtung neu zueinander eingestellt. Dabei kann z.B. der Anpressdruck und zum anderen der Mahlspalt geregelt werden.

Je höher der Anpressdruck ist, umso größer ist der Energiebedarf, also der Kilowatt-Verbrauch. Bei einem höheren Anpressdruck wird mehr Zerkleinerungsenergie erzeugt, welche zum Teil als Wärme an das zu zerkleinernde Produkt und auch an das Walzenmaterial abgegeben wird. Das bedeutet, dass sich auch die Temperatur im Innenraum des Walzenstuhles oder einer ähnlichen Maschine erhöht. Ist der Produktschleier gleichmäßig, kann man mit Hilfe der Temperatur, die sich auf der Oberfläche der Walze einstellt und gemäss der Erfindung mit Temperaturfühlern erfasst wird, die Mahlarbeit optimieren, indem man eine dem zu bearbeitenden Produkt zugeordnete optimale Temperatur mit Hilfe des Anpressdruckes und/oder der Mahlspaltverstellung verändert. Diese Veränderung kann sowohl manuell als auch vollautomatisch mit Hilfe eines Computers und/oder einer Steuerung, beispielsweise einer SPS-Steuerung (Selbst Programmierbare Steuerung) oder auch PLC-Steuerung (Programable Logic Control) (Regelvorrichtung), erfolgen.

Wie schon ausgeführt, gibt es für verschiedene zu bearbeitende Produkte verschiedene optimale Temperaturen. Reis wird beispielsweise mit kalten Walzen gemahlen, während Weizen bei weitaus höheren Temperaturen gemahlen werden kann. Unter dem Begriff "Körnerfrüchte" fallen Früchte mit harter oder weicher Schale, wie Getreidekörner, Hülsenfrüchte, Mais, Reis, auch geschälter Reis und dergleichen, auch Bohnen, wie Kaffeebohnen, Kakaobohnen oder dergleichen. Wie ausgeführt, können gemäss der Erfindung sämtliche Walzenarten, das heisst die Oberflächen der Walzen, temperaturmässig kontrolliert werden. Dies können Riffelwalzen, Glattwalzen oder auch gemischte Riffel-/Glattwalzen sein.

Eine Temperaturmessung erfolgt an mindestens zwei Stellen der Oberflächen der Walzen und/oder des Produktschleiers unterhalb der Walzen. Erfindungsgemäss sind die Temperaturfühler in beiden Seitenbereichen der Walzen oder des Produktschleiers angeordnet. Es ist auch möglich, die Temperaturmessung an mehreren Stellen vorzunehmen. Sind drei Temperatursensoren vorgesehen, sind diese vorteilhaft in beiden Seitenbereichen und annähernd in der Mitte der Walzen oder des Produktschleiers angeordnet. Eine unterschiedliche Temperaturverteilung der Oberflächen der Walzen beruht in der Regel auf einer unterschiedlichen Zerkleinerung des Mahlgutes. Sind zwei Walzen beispielsweise nicht parallel zueinander eingestellt, wird sich die Temperatur in dem Bereich, in dem der Mahlspalt kleiner ist, stärker erhöhen, während sich die Temperatur in dem Bereich, in dem der Mahlspalt grösser ist, nicht oder nicht so stark erhöht. Gemäss der Erfindung werden diese Temperaturdifferenzen auf der Oberfläche der Walze bestimmt, so dass die Parallelität der Walzen eingestellt werden kann. Anzufügen ist, dass auch der Fall möglich ist, dass die Walzen parallel eingestellt sind, und dennoch eine ungleichmäßige Temperaturverteilung auf der Oberfläche der Walze gemessen wird. In diesem Fall ist der Zulauf des Mahlgutes zu dem Walzenstuhl zu kontrollieren. Bei einem ungleichmäßigen Zulauf ist in dem Bereich, in dem mehr Mahlgut zugeführt wird, eine höhere Temperatur der Oberfläche der Walze vorhanden als in dem Bereich, in dem weniger Mahlgut zugeführt wird.

Das erfindungsgemäße System und Verfahren hat über die Automatisierung und system-gesteuerte Optimierung und Überwachung den Vorteil, dass der Betrieb einer Mühle an Sicherheit gewinnt. Zum einen ist es nicht mehr erforderlich, dass der Müller oder Mitarbeiter mit der Hand die Temperaturverteilung der Walzen bei laufenden Walzen kontrolliert. Diese Kontrolle bei laufenden Walzen ist nicht ungefährlich. Für die erfindungsgemässe Kontrolle ist es nicht mehr notwendig, das Gehäuse des Walzenstuhles während des Mahlvorganges zu öffnen. Ein weiterer Sicherheitsaspekt besteht darin, dass die Temperaturerfassung gemäss der Erfindung jederzeit die Beobachtung einer schlagartigen Erhöhung der Temperatur ermöglicht. Eine schlagartige Erhöhung der Temperatur tritt auf, wenn die Walzen mit dem Walzenmaterial, also beispielsweise Stahl auf Stahl, Gummi auf Gummi, Guss auf Guss, Kunststoff auf Kunststoff, Porzellan auf Porzellan, Stein auf Stein und so weiter, direkt aufeinander laufen. In diesem Fall ist es möglich, von der Regeleinrichtung den Mahlspalt innerhalb kürzester Zeit auf eine Sicherheitsposition zu vergrößern oder sogar eine Schnellabschaltung vorzunehmen. Mit dem erfindungsgemässen System und Verfahren ist es weiterhin möglich, die Güte der Oberflächen der Mahlwalzen zu überprüfen. Eine zu hohe Temperatur kann einen Hinweis jeweils darauf geben, dass die Oberflächen der Mahlwalzen nicht mehr in Ordnung sind. Dieses lässt sich anhand des Mahlproduktes prüfen. Ist das Mahlprodukt in Ordnung, die Temperatur der Walzen aber zu hoch, bedeutet dieses, dass die Oberfläche der Walzen nicht mehr in Ordnung ist. In diesem Fall sind beispielsweise die Riffel abgearbeitet, das heisst, die Walze ist zu glatt. Mit dem erfindungsgemässen Verfahren ist eine Optimierung des Produktionsablaufes und des Betriebs der Produktionsanlage durch einfache Kontrollmöglichkeiten und durch vorgegebene Werte, die beispielsweise aus Versuchen erhalten werden, möglich. Die erfindungsgemässe Messeinrichtung kann vollautomatisch arbeiten, das heißt, Messpunkte werden beispielsweise von einer Regeleinrichtung abgefragt. Die Messeinrichtung kann aber auch manuell von Messpunkt zu Messpunkt transportiert werden. Wie beschrieben können zur Temperaturerfassung insbesondere zusätzlich Infrarot-Temperaturmessgeräte eingesetzt werden. In diesem Fall ist ein berührungsloses Messen von Temperaturen in sehr grossen Temperaturbereichen möglich. Die Anwendung erfolgt mit dem Infrarot-Messsystem gemäß der Erfindung dort, wo Temperaturen von gefährlichen, schwer erreichbaren und bewegten Materialien, nämlich den Mahlwalzen, zu messen sind, ohne das Risiko von Verbrennungen, Quetschungen und Kontaminationen.

Die Temperaturen der Oberfläche der Walzen richtet sich nach Flussschema, Walzenmaterial, Walzenzustand, Walzenriffelung, Produktbeschaffenheit, Ausführung der Lagerung, Umgebungstemperatur und so weiter. In Verbindung mit der Kontrolle der Leistungsaufnahme kann die Überwachung einzelner Mahlpassagen und/oder einer gesamten Vermahlungsanlage einfacher durchgeführt werden. Insbesondere für ungeübtes Personal wird die Kontrolle einfacher. Ein wesentlicher Vorteil der Erfindung ist der, dass die Temperatur dort, wo sie erzeugt wird, nämlich auf der Oberfläche der Mahlwalzen gemessen wird. Die Messung der Temperatur des Produktes sollte annähernd denselben Wert ergeben.

Die systemgesteuerte Messung und Beurteilung, ob die Walzen zueinander parallel stehen und damit die optimale Vermahlungslinie haben, hat weiter den Vorteil, dass falls ein Anlagenbetreiber das erfindungsgemässe System und Verfahren in Vermahlungsmaschinen einsetzt, dies zur deutlichen Steigerung der Vermahlungseffizienz führen kann. Zudem ist das erfindungsgemässe System verglichen zum Partikelgrössenmessgerät wirtschaftlich. Im Vergleich zum heutigen Temperaturstab, welcher über den Walzen montiert ist, ist das erfindungsgemässe System (i) in der Reaktion schneller, da das System direkt in der Walze integriert ist, (ii) zweimal günstiger, (iii) food safe, und (iv) kann mehr Funktionen integrieren (wie die Möglichkeit der eindeutigen Walzenidentifikation und Verschleisszustand etc.).

Als Ausführungsvariante kann das erfindungsgemässe System auch in das in jeder Walze bereits bestehende Auswuchtloch eingebaut werden. Es besteht aus der Sendeeinheit, dem Mikroprozessor, der Batterie, einem Temperatur- und einem Vibrationssensor. Durch Extrapolation und entsprechendem Walzenerwärmungsmodell, kann die Walzentemperatur z.B. in der Mitte abgeschätzt werden. Qualitativ besser wird diese Schätzung, wenn zwei Systeme (links / rechts) verwendet werden. Bei dieser Variante wird das heute bereits vorhandene Auswuchtloch ganz oder fast ganz durchgebohrt. Darin wird das Sensorsystem aufgenommen. Über die Walzenlänge sind Temperatursensoren verteilt, welche zur Oberfläche ausgerichtet sind. Weist die Passage (d.h. Produkteführung, typischerweise inklusive Mahlen und Sichten) links oder rechts einen unterschiedlichen Spalt auf, so erwärmt sich die Walze unterschiedlich. Diesen Unterschied können die Temperatursensoren schnell feststellen. Die Temperaturwerte werden regelmässig drahtlos an die Maschinensteuerung oder direkt zur Steuereinheit und/oder auf eine IoT Cloud gesendet und ausgewertet. Algorithmen bewerten die aktuellen Daten und empfehlen den Anlagenbetreiber wie er / sie den Spalt verändern sollte, damit die Walzen optimal zu einander stehen, oder sie signalisieren der erwähnten Regelvorrichtung mittels entsprechender Steuerungsbefehle, wie die Walzeneinstellung zu verändern ist.

Die in die Walzen eingebauten Sensorsysteme können z.B. mit einem Bluetooth Low Energy Chip zur drahtlosen Übertragung der Temperatur- und Vibrationsdaten und -laufzeit ausgestattet sein. Der BLE-Chip ermöglicht eine eindeutige Walzenidentifikation, welche via Internet in einer zentralen Datenbank abgelegt werden kann. Die eindeutige Walzennummer bildet auch den ersten Parameter von den zu der Walze dazugehörigen Werten wie, Art der Walze, Bombierung und Walzenhöchsttemperatur. Die Werte bilden einen ganzen Walzendatensatz, der es den Anlagelieferanten ermöglicht schnell und die richtigen Walzen im Falle eines Services zu liefern oder zu ersetzen. Zudem kann ein entsprechender Anlagelieferant auch gezielt ein Angebot unterbreiten, weil auch der Zustand der Walze durch entsprechende Algorithmen bekannt ist.

Zum Ausgleich der Temperaturentwicklung innerhalb einer Walze, kann diese mit einer Bombierung gefertigt werden, damit diese im erwärmten Zustand in jedem Abschnitt (links / mitte / rechts) effizient mahlt. Durch die auf der gesamten Walzenlänge verteilten Temperatursensoren kann festgestellt werden, ob die Bombierung zu stark oder zu schwach (Hohllaufen) ausgeführt ist. Das System kann dem Anlagenbetreiber durch entsprechende Algorithmen mitteilen, welche Bombierung für die Betreibungsart bzw. sein häufigstes Produkt am besten geeignet ist.

Die Beurteilung des Walzenspalts findet anhand der Temperaturmessung statt. Die Temperaturentwicklung ist eine Funktion vom Anpressdruck der Walzen. Im Weiteren kann das System Remote ermöglichen zu sehen, ob eine Walze gefährlich erhitzt ist und den Betreiber per Notruf / SMS warnen oder z.B. die Anlage automatisiert abschalten.

Die Beurteilung des Walzenzustands hinsichtlich Verschleiss findet anhand der Temperatur- und Vibrationsmessung, sowie weiteren Werten wie Walzenlaufzeit, Stromaufnahme des Walzenantriebsmotors, Häufigkeit des verarbeiteten Produkts (weich / mittel / hart) statt. Ein Algorithmus der Steuereinheit, welcher die genannten Verschleissparameter enthält, berechnet den aktuellen Walzenzustand. Die Steuereinheit oder der Anlagenbetreiber kann so rechtzeitig einen Walzentausch/- service einleiten. Dies hat einen Einfluss auf die Gesamtmahl- und Energieeffizienz. Verschlissene Walzen werden tiefer geführt und damit mehr Energie aufgenommen, was sich in den Betriebskosten wiederspiegelt.

### Referenzliste

- 1/1': Erste Walze einer Mahlwalzenpaarung
1a Walzenmessparameter
1a1 Walzentemperatur
1a11 Istwert
1a12 Sollwert
1a13 Temperaturgradient
1a2 Vibration
1a3 Beschleunigung/Verzögerung
1a4 Verbleibende Lebensdauer der Walze 1/1'
1a5 Verschleissparameter
1a6 Walzenform
1a7 Drall der Walze
1a8 Riffelanzahl
1b Identifikationsmittel / RFID
1b1 Walzennummer
1b2 Riffelidentifikation/Riffeltypus
- 2/2': Sensoren
2a Temperatursensor
2b Vibrationssensor
2c Accelerometer
2d Drucksensor
2e Kraftsensor
2f Verschleisssensor
2g Deformationssensor
- 3: Umfangsfläche der Mahlwalze 1
- 4/4': Datensender
- 5/5': Datenempfänger
- 6/6': Multiplexer
- 7/7': Signalwandler
- 8/8': Leiterplatte
- 9/9': Energieempfänger, Energieerzeuger
- 10/10': Walzenkörper
- 11/11': Aufnahmeöffnung
- 12/12': Messeinrichtung
- 13': Gewinde der als Bolzen ausgebildeten Messeinrichtung 12'
- 14': Gegengewinde der Aufnahmeöffnung 11'
- 17': Innenraum oder Hohlraum des Walzenkörpers 10'
- 18/18': Mahlanlage
181 Betriebsparameter der Mahlanlage
1811 Walzeneinstellung
18111 Spaltbreite der Walzenpaarung/Abstand der Walzen
18112 Drehzahl
18113 Diagnoseindikator für Wickeln
18114 Parallelität der Walzen
1812 Energieverbrauch
- 19: Zweite Mahlwalze
- 20: Stirnseite bzw. distales Ende der Mahlwalze
- 21: Magnet zur induktiven Kopplung
- 22: Leitung zwischen Datenempfänger 5/5' und Steuereinheit 23
- 23: Steuereinheit, Steuervorrichtung
231 Regelvorrichtung
232 Alarmvorrichtung
2321 Alarmtrigger
2322 Alarm-Triggerparameter
2323 Alarm-Switch
233 Shut-Down-Vorrichtung
2331 Shut-Down-Trigger
2332 Shut-Down-Triggerparamter
2333 Shut-Down-Switch
- 24: Anzeigemittel des Steuereinheit 23
- 25: Weitere Leitung
- 26: Optionales übergeordnetes Leitsystem
- 27: Mahlwalzenposition mit Trockenlauf
- 28: Selbst-optimierende, adaptive Produkteverarbeitungsanlage
- 29: Kabel/Datenbus
- 30: Stecker

- 31: Mikroprozessor
- 32: Energiespeicher
- 33: Walzenpaarung
- 34: Vorrichtung für maschinelles Lernen
341 Überwachungseinheit
342 Lerneinheit

## Patentansprüche

1. Selbst-optimierende, selbst-adaptive Produktverarbeitungsanlage (28) mit einer Mahlanlage (18) enthaltend mindestens eine Walzenpaarung (33), wobei die Walzenpaarung (33) für die Verarbeitung eines Produktes zwei Walzen (1/1',19) umfasst, und mindestens eine der Walzen (1/1') mehrere Sensoren (2/2') zur Erfassung von Messwerten enthält, die einen Zustand der mindestens einen Walze (1/1') charakterisieren, wobei eine Messeinrichtung (12/12') in eine Aufnahmeöffnung (11/11') eines Walzenkörpers (10/10') der mindestens einen Walze (1/1') der Walzenpaarung (33) für die Verarbeitung eines Produktes eingesetzt ist, welche Messeinrichtung (12/12') mindestens einen der Sensoren (2/2') zum Erfassen von Messwerten aufweist, die einen Zustand der Walze (1/1') charakterisieren, wobei mit einem Datenempfänger (5/5') einer Steuereinheit (23) der Produktverarbeitungsanlage (28) von einem Datensender (4/4') der Messeinrichtung (12/12') von der mindestens einen Walze (1/1') der Walzenpaarung (33) Messwerte empfangen werden, **dadurch gekennzeichnet,**
**dass** mittels an der mindestens einen Walze (1/1') angebrachten Identifikationsmittel (1b) basierend auf elektronisch gespeicherten Daten der Identifikationsmittel (1b) mindestens Art der Walze (1,1') und/oder individuelle Identifikation der Walze (1/1') mit der Steuereinheit (23) eindeutig identifizierbar ist,
**dass** die Sensoren (2/2') mindestens zwei oder mehr Temperatursensoren (2a) umfassen, welche entlang der Rotationsachse der mindestens einen Walze (1,1') enthaltend angeordnet sind zum Ermitteln eines Temperaturprofils oder Temperaturgradients der Walze (1/1') entlang dieser Richtung, wobei Temperaturwerte der Temperatursensoren (2a) und/oder Temperaturprofil und/oder Temperaturgradient auf die Steuereinheit übertragbar sind,
**dass** die Sensoren (2/2') der mindestens eine der Walzen (1/1') zusätzlich zu den mindestens zwei oder mehr Temperatursensoren (2a), einen Vibrationssensor (2b) zur Vibrationsdetektion (1a2) und/oder ein Accelerometer (2c) zum Überwachung von Drehzahl (18111) und/oder Beschleunigungen/Verzögerungen (1a3) der Walze (1/1') umfasst, und
**dass** die Steuereinheit (23) zur Generierung und Vorhersage einer verbleibenden Lebensdauer (1a4) der Walze (1/1') und/oder Verschleissparameter (1a5) und/oder Betriebsparameter (181) eine maschinell lernende Einheit (34) umfasst, wobei der Walzenbetrieb und die Breite des Spaltes (18111) zwischen den zwei Walzen (1/1',19) der Walzenpaarung (33) und/oder die Parallelität (18114) der Walzen (1/1',19) von der Steuereinheit (23) und/oder einer mit der Steuereinheit (23) verbundenen Regelvorrichtung (231) basierend auf den empfangenen Messwerten mittels der maschinell lernenden Einheit (34) automatisiert optimierbar ist.

2. Selbst-optimierende, adaptive Produktverarbeitungsanlage gemäss Anspruch 1, wobei die mindestens eine Walze (1/1') den Datensender (4/4'), einen Mikroprozessor, einen Energiespeicher, die mindestens zwei Temperatursensoren (2a) und den Vibrationssensor (2b) umfasst.

3. Selbst-optimierende, adaptive Produktverarbeitungsanlage gemäss einem der Ansprüche 1 oder 2, wobei die mindestens eine Walze (1/1') im Bereich ihrer distalen Enden jeweils eine Messeinrichtung (12/12') mit einem Temperatursensor (2a) umfasst, wobei mittels der mindestens zwei Temperatursensoren (2a) der jeweiligen distalen Enden ein Temperaturgradient für die Walze (1/1') messbar ist.

4. Selbst-optimierende, adaptive Produktverarbeitungsanlage (28) gemäss einem der Ansprüche 1 bis 3, wobei mittels der mindestens zwei Temperatursensoren (2a) die Steuereinheit (23) einen Temperaturgradienten (1a13) entlang der Walze (1/1') misst, der an die Steuereinheit (23) übertragen wird, und wobei Abstand und/oder Parallelität des Walzenpaars (1/1') basierend auf dem gemessenen Temperaturgradienten (1a13) mittels der Steuervorrichtung (23) automatisch korrigiert und optimiert angepasst wird.

5. Selbst-optimierende, adaptive Produktverarbeitungsanlage (28) gemäss einem der Ansprüche 1 bis 4, wobei die Steuereinheit (23) mittels RFID oder anderen Identifikationsmitteln (1b), welche an der Walze (1/1') angebracht sind, basierend auf elektronisch gespeicherten Daten des Identifikationsmittels (1b) die Walze (1/1') eindeutig identifiziert, wobei einer Identifikation der Walze (1/1') mindestens Walzennummer (1b1) und/oder Riffelidentifikation (1b2) zugeordnet sind.

6. Selbst-optimierende, adaptive Produktverarbeitungsanlage gemäss einem der Ansprüche 1 bis 5, wobei mittels der Steuereinheit (23) die Walzentemperatur (1a1) bei den mindestens zwei Sensoren (2a) kontinuierlich gemessen und überwacht wird.

7. Selbst-optimierende, adaptive Produktverarbeitungsanlage gemäss einem der Ansprüche 1 bis 6, wobei die Walze (1/1') einen RFID-Tag, die mindestens zwei Temperatursensoren (2a), den Beschleunigungssensor (2c) und den Vibrationssensor (2b) umfasst, wobei die Steuereinheit (23) basierend auf den Messdaten der Sensoren (2/2') Parameter betreffend der verbleibenden Lebensdauer (1a4) der Walze (1/1') und/oder der Verschleissparameter (1a5) und/oder der Betriebsparameter (181), und/oder Drehzahl (18112) und/oder Beschleunigungen/Verzögerungen (1a3) der Walze (1/1') und/oder Walzenform (1a6) und/oder Riffelanzahl (1a8) der Walze (1,1') generiert.

8. Selbst-optimierende, adaptive Produktverarbeitungsanlage gemäss Anspruch 7, wobei die Verschleissparameter (1a5) und/oder Betriebsparameter (181) Diagnoseindikatoren für Wickeln (18113) oder andere mechanische Veränderung der Walze (1/1') umfassen.

9. Selbst-optimierende, adaptive Produktverarbeitungsanlage (28) gemäss einem der Ansprüche 7 oder 8, wobei zur Generierung und Vorhersage der verbleibenden Lebensdauer (1a4) der Walze (1/1') und/oder der Verschleissparameter (1a5) und/oder der Betriebsparameter die Steuereinheit (23) die maschinell lernende Einheit (34) umfasst, mittels welcher durch Signalgenerierung an die Regelvorrichtung (231) der Betrieb und die Wartung selbst-adaptiv mindestens in Bezug auf Form (1a6) und/oder Drall (1a7) und/oder Riffelanzahl (1a8) der Walze (1/1') optimierbar sind.

10. Selbst-optimierende, adaptive Produktverarbeitungsanlage (28) gemäss einem der Ansprüche 1 bis 9, wobei die Optimierung des Betriebs der Walzenpaarung (33) und/oder der Parallelität (18114) der Walzen (1/1',19) von der Steuereinheit (23) und/oder einer mit der Steuereinheit (23) verbundenen Regelvorrichtung (231) basierend auf den empfangenen Messwerten mittels der maschinell lernenden Einheit (34) erfolgt, wobei die maschinell lernende Einheit (34) eine Überwachungseinheit (341) zum Überwachen der empfangenen Messwerte und eine Lerneinheit (342) umfasst, und wobei die Überwachungseinheit (341) die Temperatur (1a1) während der Zeit einer Erwärmung mit Istwert (1a11) und Sollwert (1a12) der Temperatur (1a1), der Spaltbreite (18111) und/oder Drehzahl (18111) und/oder Wickeln (18113) und/oder Parallelität der Walze (18114) zeitlich erfasst und die Lerneinheit (342) den Lernvorgang durch Verknüpfung des Istwerts (1a11) und Sollwerts (1a12) der Temperatur (1a1) während der Zeit (t1, t2,, t3,...), Spaltbreite (18111) und/oder Drehzahl (18112) und/oder Wickeln (18113) und/oder Parallelität der Walze (18114) durchführt.

11. Selbst-optimierende, adaptive Produktverarbeitungsanlage (28) gemäss einem der Ansprüche 1 bis 10, wobei die Mahlwalze 1, 1' mindestens einen Energieempfänger (9, 9') und/oder Energiespeicher für eine Energieversorgung des Sensors (2, 2') umfasst.

12. Selbst-optimierende, adaptive Produktverarbeitungsanlage (28) gemäss einem der Ansprüche 1 bis 10, wobei der mindestens eine Energieempfänger (9, 9') als induktiver Energieempfänger (9, 9') realisiert ist, wobei elektrische Energie über ein elektromagnetisches Feld von einem Sender der Mahlanlage (18/18') an den Energieempfänger (9, 9') in der Walze kabellos übertragbar ist.

13. Verfahren zum Betreiben einer Produktverarbeitungsanlage (28) gemäss einem der Ansprüche 1 bis 12, wobei mit dem Datenempfänger (5/5') der Produktverarbeitungsanlage (28) von einem Datensender (4/4') mindestens von einer der Walzen (1/1') der Walzenpaarung (33) übertragene Messwerte empfangen werden, und der Betrieb der Produktverarbeitungsanlage (28) basierend auf den übertragenen Messwerten mittels einer selbst-lernenden Struktur der maschinell lernenden Einheit (34) mindestens in Bezug auf Form (1a6) und/oder Drall (1a7) und/oder Riffelanzahl (1a8) der Walze (1/1') optimiert wird.

## Claims

1. Self-optimising, self-adaptive product processing system (28) having a grinding plant (18) containing at least one roller pair (33), wherein the roller pair (33) for processing a product comprises two rollers (1/1', 19), and at least one of the rollers (1/1') contains several sensors (2/2') for determining measurements which characterise a state of the at least one roller (1/1'), wherein a measuring device (12/12') is inserted into a receiver opening (11/11') of a roller body (10/10') of the at least one roller (1/1') of the roller pair (33) for processing a product, which measuring device (12/12') has at least one of the sensors (2/2') for determining measurements which characterise a state of the roller (1/1'), wherein measurements are received by a data receiver (5/5') of a control unit (23) of the product processing system (28) from a data transmitter (4/4') of the measuring device (12/12') of the at least one roller (1/1') of the roller pair (33), **characterised in that**
at least one kind of roller (1, 1') and/or individual identification of the roller (1/1') can be clearly identified by the control unit (23) by means of identification means (1b) attached to at least one roller (1/1') based on electronically stored data of the identification means (1b),
the sensors (2/2') comprise at least two or more temperature sensors (2a), which are arranged to be contained along the axis of rotation of the at least one roller (1, 1') for ascertaining a temperature profile or temperature gradient of the roller (1/1') in this direction, wherein temperature values of the temperature sensors (2a) and/or temperature profile and/or temperature gradient can be transferred to the control unit,
in addition to the at least two or more temperature sensors (2a), the sensors (2/2') of the at least one of the rollers (1/1') comprises a vibration sensor (2b) for detecting vibration (1a2) and/or an accelerometer (2c) for monitoring the rotational speed (18111) and/or accelerations/delays (1a3) of the roller (1/1'), and
the control unit (23) for generating and predicting a remaining lifetime (1a4) of the roller (1/1') and/or attrition parameters (1a5) and/or operating parameters (181) comprises a mechanically learning unit (34), wherein the roller operation and the width of the gap (18111) between the two rollers (1/1', 19) of the roller pair (33) and/or the parallelism (18114) of the rollers (1/1', 19) of the control unit (23) and/or a regulating device (231) connected to the control unit (23) can be automatically optimised by means of the mechanically learning unit (34) based on the measurements received.

2. Self-optimising, adaptive product processing system according to claim 1, wherein the at least one roller (1/1') comprises the data transmitter (4/4'), a microprocessor, an energy store, the at least two temperature sensors (2a) and the vibration sensor (2b).

3. Self-optimising, adaptive product processing system according to one of claims 1 or 2, wherein the at least one roller (1/1') respectively comprises a measuring device (12/12') having a temperature sensor (2a) in the region of its distal end, wherein a temperature gradient for the roller (1/1') can be measured by means of the at least two temperature sensors (2a)of the respective distal ends.

4. Self-optimising, adaptive product processing system (28) according to one of claims 1 to 3, wherein the control unit (23) measures a temperature gradient (1a13) along the roller (1/1') by means of the at least two temperature sensors (2a), said temperature gradient being transferred to the control unit (23), and wherein spacing and/or parallelism of the roller pair (1/1') are automatically corrected and optimally adjusted by means of the control device (23) based on the temperature gradients (1a13) measured.

5. Self-optimising, adaptive product processing system (28) according to one of claims 1 to 4, wherein the control unit (23) clearly identifies the roller (1/1') by means of RFID or other identification means (1b), which are attached to the roller (1/1'), based on electronically stored data of the identification means (1b), wherein at least one roller number (1b1) and/or ripple identification (1b2) are allocated to an identification of the roller (1/1').

6. Self-optimising, adaptive product processing system according to one of claims 1 to 5, wherein the roller temperature (1a1) is continuously measured and monitored with the at least two sensors (2a) by means of the control unit (23).

7. Self-optimising, adaptive product processing system according to one of claims 1 to 6, wherein the roller (1/1') comprises an RFID tag, the at least two temperature sensors (2a), the acceleration sensor (2c) and the vibration sensor (2b), wherein the control unit (23) generates parameters relating to the remaining lifetime (1a4) of the roller (1/1') and/or the attrition parameters (1a5) and/or the operating parameters (181), and/or rotational speed (18112) and/or accelerations/delays (1a3) of the roller (1/1') and/or roller shape (1a6) and/or ripple number (1a8) of the roller (1, 1') based on the measured data of the sensors (2/2').

8. Self-optimising, adaptive product processing system according to claim 7, wherein the attrition parameters (1a5) and/or operating parameters (181) comprise diagnosis indicators for coiling (18113) or other mechanical changes to the roller (1/1').

9. Self-optimising, adaptive product processing system (28) according to one of claims 7 or 8, wherein the control unit (23) comprises the mechanically learning unit (34) for generating and predicting the remaining lifetime (1a4) of the roller (1/1') and/or the attrition parameters (1a5) and/or the operating parameters, by means of which unit the operation and the maintenance can be optimised self-adaptively at least in relation to shape (1a6) and/or twist (1a7) and/or ripple number (1a8) of the roller (1/1') by signal generation at the regulating device (231).

10. Self-optimising, adaptive product processing system (28) according to one of claims 1 to 9, wherein the optimisation of the operation of the roller pair (33) and/or the parallelism (18114) of the rollers (1/1',19) of the control unit (23) and/or a regulating device (231) connected to the control unit (23) takes place based on the received measurements by means of the mechanically learning unit (34), wherein the mechanically learning unit (34) comprises a monitoring unit (341) for monitoring the received measurements and a learning unit (342), and wherein the monitoring unit (341) temporally detects the temperature (1a1) during the time of a warming with an actual value (1a11) and desired value (1a12) of the temperature (1a1), the gap width (18111) and/or rotational speed (18111) and/or coiling (18113) and/or parallelism of the roller (18114), and the learning unit (342) carries out the learning process by linking the actual value (1a11) and the desired value (1a12) of the temperature (1a1) during the time (t1, t2,, t3,...), the gap width (18111) and/or rotational speed (18112) and/or coiling (18113) and/or parallelism of the roller (18114).

11. Self-optimising, adaptive product processing system (28) according to one of claims 1 to 10, wherein the grinding roller 1, 1' comprises at least one energy receiver (9, 9') and/or energy store for an energy supply of the sensor (2, 2').

12. Self-optimising, adaptive product processing system (28) according to one of claims 1 to 10, wherein the at least one energy receiver (9, 9') is designed as an inductive energy receiver (9, 9'), wherein electrical energy can be wirelessly transferred from a transmitter of the grinding system (18/18') to the energy receiver (9, 9') in the roller via an electromagnetic field.

13. Method for operating a product processing system (28) according to one of claims 1 to 12, wherein measurements transferred at least by one of the rollers (1/1') of the roller pair (33) are received from a data transmitter (4/4') by the data receiver (5/5') of the product processing system (28), and the operation of the product processing system (28) is optimised based on the transferred measurements by means of a self-learning structure of the mechanically learning unit (34) at least in relation to shape (1a6) and/or twist (1a7) and/or ripple number (1a8) of the roller (1/1').

## Revendications

1. Installation de transformation de produit (28) à optimisation et adaptation automatiques comprenant une installation de broyage (18) comportant au moins une paire de rouleaux (33), ladite paire de rouleaux (33) comprenant deux rouleaux (1/1',19) destinés à la transformation d'un produit, et au moins un des rouleaux (1/1') comportant plusieurs capteurs (2/2') permettant de détecter des valeurs de mesure caractéristiques d'un état du ou des rouleaux (1/1'), un dispositif de mesure (12/12') étant installé dans une ouverture de réception (11/11') présente dans le corps (10/10') du ou des rouleaux (1/1') de la paire de rouleaux (33) destinés à la transformation d'un produit, lequel dispositif de mesure (12/12') présente au moins un des capteurs (2/2') permettant de détecter des valeurs de mesure caractéristiques d'un état du rouleau (1/1'), des valeurs de mesure étant reçues par un récepteur de données (5/5') d'une unité de commande (23) de l'installation de transformation de produit (28) en provenance d'un émetteur de données (4/4') du dispositif de mesure (12/12') du ou des rouleaux (1/1') de la paire de rouleaux (33) ; **caractérisée en ce que**
le type du rouleau (1,1') et/ou un identifiant individuel du rouleau (1/1'), au moins, peuvent être identifiés clairement par l'unité de commande (23) à l'aide de moyens d'identification (1b) disposés sur le ou les rouleaux (1/1'), grâce à des données des moyens d'identification (1b) stockées électroniquement,
les capteurs (2/2') comprennent au moins deux capteurs de température (2a) disposés le long de l'axe de rotation du ou des rouleaux (1,1') de manière à contenir ledit axe, lesdits capteurs permettant de déterminer un profil de température ou un gradient de température du rouleau (1/1') le long de cette direction, lesdites valeurs de température des capteurs de température (2a) et/ou le profil de température et/ou le gradient de température pouvant être communiqué à l'unité de commande,
les capteurs (2/2') dudit au moins un des rouleaux (1/1') comprennent, en sus des au moins deux capteurs de température (2a), un capteur de vibrations (2b) destiné à la détection de vibrations (1a2) et/ou un accéléromètre (2c) destiné à la surveillance du régime (18111) et/ou des accélérations/ralentissements (1a3) du rouleau (1/1'), et
l'unité de commande (23) comprend une unité à apprentissage automatique (34), afin de générer et de prédire la durée utile restante (1a4) du rouleau (1/1') et/ou des paramètres d'usure (1a5) et/ou des paramètres d'exploitation (181) ; le fonctionnement des rouleaux ainsi que la largeur de l'écart (18111) entre les deux rouleaux (1/1',19) de la paire de rouleaux (33) et/ou le parallélisme (18114) des rouleaux (1/1',19) pouvant être optimisés automatiquement par l'unité de commande (23) et/ou un dispositif de régulation (231) relié à ladite unité de commande (23) compte tenu des valeurs de mesure reçues, grâce à l'unité à apprentissage automatique (34).

2. Installation de transformation de produit à optimisation et adaptation automatiques selon la revendication 1, dans laquelle le ou les rouleaux (1/1') comprennent l'émetteur de données (4/4'), un microprocesseur, un accumulateur d'énergie, les au moins deux capteurs de température (2a) et le capteur de vibrations (2b).

3. Installation de transformation de produit à optimisation et adaptation automatiques selon l'une des revendications 1 et 2, dans laquelle le ou les rouleaux (1/1') comprennent chacun, à proximité de leur extrémité distale, un dispositif de mesure (12/12') comportant un capteur de température (2a) ; un gradient de température propre au rouleau (1/1') pouvant être mesuré à l'aide des au moins deux capteurs de température (2a) des extrémités distales.

4. Installation de transformation de produit à optimisation et adaptation automatiques (28) selon l'une des revendications 1 à 3, dans laquelle l'unité de commande (23) mesure un gradient de température (1a13) le long du rouleau (1/1') à l'aide des au moins deux capteurs de température (2a), lequel gradient est communiqué à l'unité de commande (23), et dans laquelle l'écart et/ou le parallélisme de la paire de rouleaux (1/1') sont automatiquement corrigés et optimisés à l'aide de l'unité de commande (23) compte tenu du gradient de température (1a13) .

5. Installation de transformation de produit à optimisation et adaptation automatiques (28) selon l'une des revendications 1 à 4, dans laquelle l'unité de commande (23) identifie clairement le rouleau (1/1') par RFID ou d'autres moyens d'identification (1b) disposés sur le rouleau (1/1'), compte tenu de données du moyen d'identification (1b) stockées électroniquement; le numéro de rouleau (1b1) et/ou un identifiant des cannelures (1b2) étant au moins associés à un identifiant du rouleau (1/1').

6. Installation de transformation de produit à optimisation et adaptation automatiques selon l'une des revendications 1 à 5, dans laquelle l'unité de commande (23) permet de mesurer et de surveiller en continu la température des rouleaux (1a1) en présence des au moins deux capteurs (2a).

7. Installation de transformation de produit à optimisation et adaptation automatiques selon l'une des revendications 1 à 6, dans laquelle le rouleau (1/1') comprend une étiquette RFID, les au moins deux capteurs de température (2a), le capteur d'accélération (2c) et le capteur de vibrations (2b) ; ladite unité de commande (23) générant, en fonction des données de mesure des capteurs (2/2'), des paramètres concernant la durée utile restante (1a4) du rouleau (1/1') et/ou des paramètres d'usure (1a5) et/ou des paramètres d'exploitation (181), et/ou le régime (18112) et/ou les accélérations/ralentissements (1a3) du rouleau (1/1') et/ou la forme du rouleau (1a6) et/ou le nombre de cannelures (1a8) du rouleau (1,1').

8. Installation de transformation de produit à optimisation et adaptation automatiques selon la revendication 7, dans laquelle les paramètres d'usure (1a5) et/ou paramètres concernant la durée utile restante (181) comprennent des indicateurs diagnostics concernant l'enroulement (18113) ou d'autres altérations mécaniques du rouleau (1/1').

9. Installation de transformation de produit à optimisation et adaptation automatiques (28) selon l'une des revendications 7 et 8, dans laquelle l'unité de commande (23), afin de générer et prédire la durée utile restante (1a4) du rouleau (1/1') et/ou les paramètres d'usure (1a5) et/ou les paramètres d'exploitation, comprend ladite unité à apprentissage automatique (34) à l'aide de laquelle une génération de signaux destinés au dispositif de régulation (231) permet d'optimiser l'exploitation et l'entretien de façon automatiquement adaptative eu égard à la forme (1a6) et/ou moment cinétique (1a7) et/ou au nombre de cannelures (1a8) du rouleau (1/1').

10. Installation de transformation de produit à optimisation et adaptation automatiques (28) selon l'une des revendications 1 à 9, dans laquelle l'optimisation de l'exploitation de la paire de rouleaux (33) et/ou du parallélisme (18114) des rouleaux (1/1',19) par l'unité de commande (23) et/ou par un dispositif de régulation (231) relié à l'unité de commande (23) s'effectue à l'aide de l'unité à apprentissage automatique (34) en fonction des valeurs de mesure reçues ; ladite unité à apprentissage automatique (34) comprenant une unité de surveillance (341) destinée à surveiller les valeurs de mesure reçues ainsi qu'une unité d'apprentissage (342), et ladite unité de surveillance (341) détectant dans le temps la température (1a1), pendant une période de réchauffement, avec valeur réelle (1a11) et valeur de consigne (1a12) de la température (1a1), la largeur de l'écart entre les rouleaux (18111) et/ou le régime (18111) et/ou l'enroulement (18113) et/ou le parallélisme du rouleau (18114), et ladite unité d'apprentissage (342) effectuant le processus d'apprentissage en associant la valeur réelle (1a11) et la valeur de consigne (1a12) de la température (1a1) pendant ladite période (t1, t2,, t3,...), la largeur de l'écart entre les rouleaux (18111) et/ou le régime (18112) et/ou l'enroulement (18113) et/ou le parallélisme du rouleau (18114).

11. Installation de transformation de produit à optimisation et adaptation automatiques (28) selon l'une des revendications 1 à 10, dans laquelle le rouleau de broyage 1, 1' comprend au moins un récepteur d'énergie (9, 9') et/ou un accumulateur d'énergie pour alimenter le capteur (2, 2') en énergie.

12. Installation de transformation de produit à optimisation et adaptation automatiques (28) selon l'une des revendications 1 à 10, dans laquelle l'au moins un récepteur d'énergie (9, 9') est conçu sous la forme d'un récepteur d'énergie (9, 9') inductif, de l'énergie électrique pouvant être transmise sans fil, par l'intermédiaire d'un champ électromagnétique, entre un émetteur de l'installation de broyage (18/18') et le récepteur d'énergie (9, 9') situé dans le rouleau.

13. Procédé d'exploitation d'une installation de transformation de produit (28) selon l'une des revendications 1 à 12, dans lequel le récepteur de données (5/5') de l'installation de transformation de produit (28) reçoit des valeurs de mesure communiquées par un émetteur de données (4/4') d'au moins un des rouleaux (1/1') de la paire de rouleaux (33), et l'exploitation de l'installation de transformation de produit (28) est optimisée en fonction des valeurs de mesure communiquées, à l'aide d'une structure à apprentissage automatique de l'unité à apprentissage automatique (34), eu égard au moins à la forme (1a6) et/ou au moment cinétique (1a7) et/ou au nombre de cannelures (1a8) du rouleau (1/1').
